# EUROPÄISCHE PATENTSCHRIFT

(11) **EP 2 256 068 B1**
(45) Veröffentlichungstag und Bekanntmachung des Hinweises auf die Patenterteilung: **13.07.2011**
(21) Anmeldenummer: 09161164.0
(22) Anmeldetag: 26.05.2009
(51) Int. Cl.: B65G 1/04, B65G 1/10

(54) **Schubregallager mit einer Vielzahl verschließbarer Fächer und Verfahren zum Ein- und Auslagern eines Gegenstands in dieses Lager**
Shelf storage unit with a number of closable compartments and method for loading / unloading an article into / out of the shelf
Rayonnage coulissant doté d'une multitude de compartiments et méthode pour ranger et sortir un article du rayonnage

(43) Veröffentlichungstag der Anmeldung: 01.12.2010
(73) Patentinhaber: Rowa Automatisierungssysteme GmbH, 53539 Kelberg (DE)
(72) Erfinder: Wagner, Rudolf M., Dipl.-Ing., 54550 Daun (DE)
(74) Vertreter: Zenz

(56) Entgegenhaltungen:
- WO-A-99/30248
- NL-C2- 2 000 294
- US-A- 5 683 155

## Beschreibung

Die Erfindung bezieht sich auf ein Lager mit einer Vielzahl verschließbarer Fächer bzw. auf Verfahren zum Einlagern oder zum Auslagern von Gegenständen in ein solches Lager.

Im Stand der Technik sind Lageranordnungen bekannt, die eine Vielzahl von Schubfächern oder Regalfächern aufweisen, wobei die Fächer verschlossen sind, so dass ein Bediener nur jeweils auf ein bestimmtes Fach zugreifen kann. Beispielsweise gibt es Lager, bei denen jedes Fach eine separate verschließbare Tür aufweist (sogenannte Schließfächer). Es gibt auch Lager, bei denen die einzelnen Schubfächer jeweils verriegelt sind und nur jeweils ein Schubfach nach vorn herausgezogen werden kann. Ein solches Lager ist beispielsweise in der Patentschrift CH 696 407 A5 beschrieben.

Derartige Lageranordnungen dienen beispielsweise zur Lagerung von Werkzeugen.

Im Stand der Technik sind ferner Lageranordnungen bekannt, bei denen einen Schrank mehrere nebeneinander angeordnete ausziehbare Regale (auch Schubregale genannt) aufweist. Beispielsweise sind derartige Anordnungen aus den Gebrauchsmusterschriften DE 1 872 117 U1, DE 1 849 393 U1 oder DE 1 771 205 U1 bekannt.

US 5 683 155 offenbart ein Lager, ein Verfahren zum Einlagern und ein Verfahren zum Auslagern gemäß dem Oberbegriff der Ansprüche 1, 13 und 16.

Darüber hinaus sind aus den Druckschriften WO 02/29194 A1 und EP 1 382 273 A1 Lageranordnungen bekannt, bei denen ein Zugriff auf ausgewählte Fächer eines Regals mit Hilfe von Rollläden freigegeben wird, wobei jeweils ein Paar von Rollläden in vertikaler und in horizontaler Richtung vor einer Frontseite der Regalfächer verschiebbar sind.

Der Erfindung liegt die Aufgabe zugrunde, ein Lager zu schaffen, bei dem die Lagerung der einzelnen Gegenstände (beispielsweise von Werkzeugen) raumsparend ist und bei dem ein Nutzer oder Bediener jeweils nur auf ein ausgewähltes Fach, das heißt auf einen in dem ausgewählten Fach gelagerten Gegenstand (beispielsweise Werkzeug) zugreifen kann. Der Zugriff auf das Fach soll vorzugsweise durch eine elektronische Steuereinrichtung in Abhängigkeit von bestimmten Zugriffsvoraussetzungen freigebbar sein.

Diese Aufgabe wird erfindungsgemäß durch ein Lager mit den Merkmalen des Anspruchs 1 bzw. durch ein Verfahren zum Einlagern eines Gegenstands mit den Merkmalen des Anspruchs 13 bzw. ein Verfahren zum Auslagern eines Gegenstands mit den Merkmalen des Anspruchs 16 gelöst.

Das erfindungsgemäße Lager mit einer Vielzahl verschließbarer Fächer weist mehrere entlang einer ersten Raumrichtung (x) nebeneinander angeordnete Schubregalmodule auf, die jeweils oder gemeinsam in einem Gehäuse aufgenommen sind. Die Schubregalmodule sind in einer zu der ersten Raumrichtung (x) senkrechten zweiten Raumrichtung (y) aus dem Gehäuse heraus bewegbar. Jedes Schubregalmodul ist in eine Mehrzahl von einseitig offenen Fächern derart unterteilt, dass die offenen Seiten aller Fächer in einer zu der ersten Raumrichtung (x) senkrechten Begrenzungsebene des Schubregalmoduls liegen, so dass die offenen Seiten der Fächer eines in das Gehäuse eingeschobenen Schubregalmoduls durch eine Wandung des Gehäuses oder eine Wandung eines benachbarten Schubregalmoduls verschlossen sind. Das Gehäuse braucht kein vollständig geschlossenes Gehäuse zu sein; in einer beispielhaften Minimalausstattung umfasst das Gehäuse lediglich eine Tragkonstruktion für die Schubregalmodule und eine den Zugriff auf Fächer der Schubregalmodule verhindernde Seitenwandung. Zu der zweiten Raumrichtung (y) senkrecht angeordnete Frontseiten der in das Gehäuse eingeschobenen Schubregalmodule bilden eine Frontebene. Ein den Zugriff auf ein ausgewähltes Fach freigebendes Bediengerät ist vor der Frontebene entlang der ersten Raumrichtung (x) bewegbar. Ein das ausgewählte Fach enthaltendes Schubregalmodul kann dann aus dem Gehäuse herausbewegt werden, wenn das Bediengerät an diesem Schubregalmodul positioniert ist, das heißt in der ersten Raumrichtung an eine vorgegebene Stelle an diesem Schubregalmodul bewegt wurde. Das Schubregalmodul kann soweit herausbewegt werden, dass sich das ausgewählte Fach vor der Frontebene befindet. Hierbei ist es denkbar, dass das Schubregalmodul vollständig herausbewegt wird. Vorzugsweise wird das Schubregalmodul jedoch nur soweit herausbewegt, dass sich das ausgewählte Fach unmittelbar vor der Frontebene befindet. Das Bediengerät weist eine Verschließvorrichtung auf, die die offenen Seiten der Fächer des vor die Frontebene herausbewegten Teils des Schubregalmoduls abdeckt und die derart von einer elektronischen Steuereinrichtung steuerbar ist, dass sie den Zugriff auf die offene Seite des ausgewählten Fachs freigibt.

Die erfindungsgemäße Gestaltung des Lagers hat den Vorteil, dass die gesamte mit der elektronischen Steuereinrichtung verbundene Antriebs- und Sensortechnik in dem vor der Frontebene bewegbaren Bediengerät integriert sein kann und die in das Gehäuse aufgenommenen Schubregalmodule jeweils nur passive Vorrichtungen darstellen. Darüber hinaus erlaubt die Lageranordnung aufgrund der Verwendung von Schubregalmodulen eine beliebige Erweiterung durch Ergänzung weiterer Schubregalmodule, ohne dass Veränderungen an dem Aufbau des Bediengeräts erforderlich sind.

Die Positionierung des Bediengeräts an dem das ausgewählte Fach enthaltenden Schubregalmodul einerseits und das Herausbewegen dieses Schubregalmoduls derart, dass sich das ausgewählte Fach vor der Frontebene befindet, andererseits können manuell angetrieben sein, wobei das Bediengerät Vorrichtungen aufweist, die verhindern, dass ein falsches Schubregalmodul herausgezogen wird und der Zugriff auf ein falsches Fach freigegeben wird. Hierbei ist eine Anordnung denkbar, die grundsätzlich nur das Herausziehen des Schubregalmoduls mit dem ausgewählten Fach gestattet. Alternativ wäre eine Anordnung denkbar, bei der zwar auch falsche Schubregalmodule herausziehbar sind, dann aber von dem Bediengerät die offenen Seiten des herausgezogenen Moduls vollständig abgedeckt bleiben und sich kein Zugriffsfenster öffnet.

Die einzelnen Schubregalmodule haben vorzugsweise die gleiche Ausdehnung in der zur ersten Raumrichtung (x) und zur zweiten Raumrichtung (y) senkrechten dritten Raumrichtung (z); dies ist allerdings keine zwingende Voraussetzung. Zudem brauchen die Schubregalmodule in der ersten Raumrichtung (x) nicht von gleicher Abmessung zu sein. Es sind somit Schubregalmodule denkbar, die unterschiedlich tiefe Fächer (mit unterschiedlicher Ausdehnung in der x-Richtung) aufweisen. Die Größe und Anordnung der Fächer innerhalb jedes Schubregalmoduls ist beliebig. Die Fächer brauchen weder auf durchgehenden Regalböden noch in vorgegebenen Reihen oder Spalten angeordnet zu sein. Es vereinfacht lediglich die Steuerung, wenn die Fächer in Zeilen und Spalten vorgegebener Breite und/oder Höhe angeordnet sind.

Damit ein Schubregalmodul in der zweiten Raumrichtung (y) aus dem Gehäuse herausbewegt werden kann, ist es erforderlich, dass das Bediengerät an diesem Schubregalmodul positioniert ist. Vorzugsweise ist es erforderlich, dass das Bediengerät derart positioniert ist, dass die Verschließvorrichtung des Bediengeräts benachbart zu der Begrenzungsebene des Schubregalmoduls positioniert ist.

Bei einer bevorzugten Ausführungsform umfasst die Verschließvorrichtung eine sich in einer zu der ersten Raumrichtung (x) und der zweiten Raumrichtung (y) senkrechten dritten Raumrichtung (z) über die gesamte Abmessung des Schubregalmoduls erstreckende Abdeckvorrichtung zum Abdecken der offenen Seiten der Fächer des vor die Frontebene herausbewegten Teils des Schubregalmoduls, wobei die Abdeckvorrichtung einen sich in der dritten Raumrichtung (z) erstreckenden Streifen in der Begrenzungsebene des herausbewegten Schubregalmoduls unabgedeckt lässt, wobei dieser Streifen die offene Seite des ausgewählten Faches einschließt. Ferner weist die Verschließvorrichtung bei dieser Ausführungsform eine den Streifen überdeckende, von der elektronischen Steuereinrichtung gesteuerte Türvorrichtung auf, die ein Fenster für den Zugriff auf die offene Seite des ausgewählten Faches öffnet. Die sich über die gesamte Abmessung des Schubregalmoduls in der dritten Raumrichtung (z) erstreckende Abdeckvorrichtung ist beispielsweise passiv derart, dass sie automatisch beim Herausbewegen des Schubregalmoduls die offenen Seiten (mit Ausnahme des Streifens) abdeckt. Bei einer Ausführungsform weist die Abdeckvorrichtung eine mit der Türvorrichtung verbundene, in der Begrenzungsebene des herausbewegten Schubregalmoduls liegende Abdeckplatte auf, wobei die Abdeckplatte beim Herausbewegen des Schubregalmoduls derart positioniert wird, dass die Breite des Streifens in der zweiten Raumrichtung der Breite der offenen Seite des ausgewählten Faches entspricht. Dies bedeutet, dass das Schubregalmodul einerseits soweit herausbewegt wird, dass der dem Gehäuse zugewandte Rand des ausgewählten Faches sich in der Frontebene befindet. Andererseits wird die Abdeckplatte so positioniert, dass ihr dem Gehäuse zugewandter Rand mit dem nach vorn weisenden Rand des ausgewählten Faches fluchtet. Der so verbleibende Streifen zwischen dem dem Gehäuse zugewandten Rand der Abdeckplatte und der Frontebene wird zunächst vollständig von der Türvorrichtung des Bediengeräts verschlossen. Die Steuereinrichtung steuert dann, wenn das Schubregalmodul bis zu der oben genannten Position herausgezogen ist, die Türvorrichtung so, dass sie den Streifen an dem Ort der offenen Seite des ausgewählten Faches öffnet. So wird gewährleistet, dass nur auf das ausgewählte Fach zugegriffen werden kann.

Bei einer alternativen Ausführungsform weist die Abdeckvorrichtung einen mit der Türvorrichtung verbundenen, in der Begrenzungsebene des herausbewegten Schubregalmoduls liegenden Rollladen auf, wobei sich der Rollladen von einer benachbart zu der Türvorrichtung angeordneten Aufrollvorrichtung zu der Frontseite des herausbewegten Schubregalmoduls erstreckt. Dies bedeutet, dass sich der Rand des Rollladens beim Herausbewegen des Schubregalmoduls an dessen Frontseite festhakt (oder auf andere Weise festgehalten wird) und der Rollladen beim weiteren Herausziehen des Schubregalmoduls abgerollt wird, wobei er die offenen Seiten der herausbewegten Fächer verschließt. Gegenüber der vorgenannten Ausführungsform mit einer Abdeckplatte hat diese Ausführungsform den Vorteil, dass das Bediengerät einen geringeren Raum vor dem Gehäuse des Lagers beansprucht. Der Raum vor dem Lager wird somit nur dann beansprucht, wenn ein Schubregalmodul in diesen Raum hinausbewegt wird. Allerdings hat die genannte Ausführungsform mit dem Rollladen den Nachteil, dass der Rollladen erst an dem äußeren Rand der stets gleich breiten Türvorrichtung ansetzt, so dass das von der Türvorrichtung geöffnete Fenster zwar unterschiedliche Höhen haben kann, aber stets die gleiche Breite aufweist. Um in diesem Fall zu vermeiden, dass neben dem ausgewählten Fach auch auf benachbarte Fächer zugegriffen werden kann, ist es erforderlich, dass sämtliche Fächer die gleiche Breite haben, oder dass eine zusätzliche Tür im Fenster angeordnet wird. Dieser Nachteil wurde bei der Ausführungsform mit der Abdeckplatte dadurch vermieden, dass sich die Abdeckplatte hinter die Türvorrichtung bewegen kann, so dass der frei gelassene Streifen schmaler als die Türvorrichtung sein kann. Um diesen Vorteil der Abdeckplatte mit dem Vorteil der Rollladen-Anordnung zu kombinieren, ist bei einer bevorzugten Weiterbildung der erfindungsgemäßen Lageranordnung vorgesehen, dass die Abdeckvorrichtung einen mit der Türvorrichtung verbundenen, in der Begrenzungsebene des herausbewegten Schubregalmoduls liegenden Rollladen aufweist, wobei sich der Rollladen von einer an der Frontseite des herausbewegten Schubregalmoduls angeordneten Aufrollvorrichtung bis zu dem Streifen erstreckt, wobei der Rollladen beim Herausbewegen des Schubregalmoduls derart positioniert wird, dass die Breite des Streifens in der zweiten Raumrichtung (y) der Breite der offenen Seite des ausgewählten Faches entspricht. Bei dieser bevorzugten Anordnung kann - wie auch bei der Anordnung mit der beweglichen Abdeckplatte - der Rand des die Frontseiten verschließenden Rollladens hinter die Türvorrichtung bewegt werden, so dass die Breite des freigelassenen Streifens schmaler als die Türvorrichtung mit den sich entlang des Streifens bewegenden Türen sein kann. Bei dieser bevorzugten Anordnung wird der Rollladen beim Herausziehen des Schubregalmoduls abgerollt, wobei die Aufrollvorrichtung mit der Frontseite des Schubregalmoduls nach vorn bewegt wird. Der Rollladen wird über die Aufrollvorrichtung dabei so gesteuert, dass er einen Streifen zwischen der Frontebene und dem Rand des Rollladens frei lässt, dessen Breite der Breite des ausgewählten Faches entspricht. Wenn dann das Schubregalmodul bis zu der gewünschten Stelle herausgezogen ist, liegt der Streifen genau über dem ausgewählten Fach. Dann öffnet die Türvorrichtung in der Querrichtung ein Fenster über dem ausgewählten Fach.

Bei einer Ausführungsform umfasst die Türvorrichtung zwei in der dritten Raumrichtung aufeinander zu bewegbare Schiebetüren. Vorzugsweise umfasst die Türvorrichtung zwei in der dritten Raumrichtung (z) aufeinander zu bewegbare Rollläden. Diese Rollläden sind von der Steuereinrichtung elektronisch gesteuert. Bei der bevorzugten Ausführungsform steuert die Steuereinrichtung die Türvorrichtung derart, dass die einander zugewandten Ränder der beiden Schiebetüren bzw. Rollläden bereits während des Positionierens des Bediengeräts und/oder während des Herausziehens des Schubregalmoduls in der dritten Raumrichtung (z) an einem der Position des ausgewählten Faches entsprechenden Ort positioniert werden und das Fenster geöffnet wird, sobald das Schubregalmodul soweit herausgezogen ist, dass die offene Seite des ausgewählten Faches hinter der Türvorrichtung positioniert ist. Dieses gleichzeitige Positionieren des Fensters der Türvorrichtung während des Bewegens des Bediengeräts und/oder des Schubregalmoduls verkürzt die Zugriffszeit auf das ausgewählte Fach.

Grundsätzlich können die Schubregalmodule übereinander oder nebeneinander angeordnet sein. Bei einer bevorzugten Ausführungsform des Lagers sind sie nebeneinander angeordnet, das heißt, diese Ausführungsform ist dadurch gekennzeichnet, dass die erste Raumrichtung (x) und die zweite Raumrichtung (y) in einer horizontalen Ebene liegen.

Vorzugsweise weist die elektronische Steuereinrichtung einen Speicher auf, in dem Daten, die jeweils ein bestimmtes Schubregalmodul und ein bestimmtes Fach in dem Schubregalmodul identifizieren, in Zuordnung zu Daten, die einen in dem bestimmten Fach einliegenden Gegenstand kennzeichnen, gespeichert sind, wobei diese einander zugeordneten Daten für sämtliche in dem Lager gelagerten Gegenstände gespeichert sind. Bei dieser Ausführungsform braucht der Bediener lediglich den Gegenstand kennzeichnende Daten einzugeben, woraufhin die elektronische Steuereinrichtung weiß, welches bestimmte Fach zu öffnen ist. Sie zeigt dies dann beispielsweise dem Bediener an, indem sie das herauszubewegende Schubregalmodul anzeigt, so dass der Bediener beispielsweise das Bediengerät zu diesem Schubregalmodul bewegen und anschließend das Schubregalmodul herausziehen kann. Die elektronische Steuereinrichtung sorgt dann dafür, dass das Schubregalmodul beim Herausziehen an exakt derjenigen Position abgebremst wird, bei der sich das ausgewählte Fach unmittelbar vor der Frontebene befindet. Gleichzeitig sorgt die Steuereinrichtung dafür, dass die Türvorrichtung das ausgewählte Fach freigibt. Die elektronische Steuereinrichtung ist somit vorzugsweise mit einer Eingabeeinrichtung gekoppelt, mit deren Hilfe ein Bediener Daten eingeben kann, die einen Gegenstand identifizieren, der in dem Lager gelagert ist und auf den der Bediener Zugriff erlangen möchte.

Es sind Ausführungsformen denkbar, bei denen das Bediengerät automatisch in der ersten Raumrichtung (x) zu dem gewünschten Schubregalmodul verfahren wird. Bei einer bevorzugten Ausführungsform jedoch wird das Bediengerät manuell entlang der ersten Raumrichtung verschoben. Vorzugsweise ist die Steuereinrichtung hierbei derart mit dem Bediengerät gekoppelt, dass sie die korrekte Positionierung des Bediengeräts in der ersten Raumrichtung erfassen kann. Das Bediengerät weist beispielsweise Sensoren auf, die Markierungen, die an den Schubregalmodulen angebracht sind, erfassen können, so dass die die Sensorsignale verarbeitende Steuereinrichtung bestimmen kann an welcher Position sich das Bediengerät entlang der ersten Raumrichtung (x) befindet.

Vorzugsweise weist das Bediengerät ferner eine Vorrichtung zum Erfassen der Position des aus dem Gehäuse herausbewegten Schubregalmoduls in der zweiten Raumrichtung (y) auf und ist die Steuereinrichtung derart mit dem Bediengerät gekoppelt, dass sie die Position des Schubregalmoduls in der zweiten Raumrichtung (y) erfassen kann. Grundsätzlich ist es auch bei der Bewegung des Schubregalmoduls aus dem Gehäuse heraus denkbar, dass diese automatisch von dem Bediengerät angetrieben wird. Bei einer gegenwärtig bevorzugten Ausführungsform jedoch wird das Schubregalmodul, nachdem das Bediengerät an ihm positioniert worden ist, manuell herausgezogen, wobei das Bediengerät einerseits die Bewegung des Schubregalmoduls erfasst und sie andererseits beispielsweise dann bremsen kann, wenn das Schubregalmodul die korrekte Position erreicht hat. Vorzugsweise steuert die Steuereinrichtung die Verschließvorrichtung derart, dass sie den Zugriff auf die offene Seite des ausgewählten Faches freigibt, nachdem die Steuereinrichtung die korrekte Position des Bediengeräts (in der x-Richtung) und die korrekte Stellung des herausbewegten Schubregalmoduls (in der y-Richtung) erfasst hat.

Bei einer bevorzugten Ausführungsform des erfindungsgemäßen Lagers sind die Schubregalmodule manuell aus dem Gehäuse herausziehbar und in das Gehäuse einschiebbar und weist das Bediengerät eine Arretiervorrichtung auf, welche sichert, dass das herausbewegte Schubregalmodul bis zu einer Position herausgezogen werden kann, bei der sich das ausgewählte Fach an einer vorgegebenen Position vor der Frontebene befindet. Bei dieser Ausführungsform ist vorzugsweise vorgesehen, dass die Steuereinrichtung mit einer Anzeigeeinrichtung gekoppelt ist, welche einem Benutzer anzeigt, zu welchem Schubregalmodul das Bediengerät zu bewegen ist, damit es aus dem Gehäuse herausgezogen werden kann. Vorzugsweise ist die Arretiervorrichtung des Bediengeräts eine von der Steuereinrichtung gesteuerte elektromechanische Stellvorrichtung, die in Ausnehmungen oder an Vorsprüngen des Schubregalmoduls angreift. Beispielsweise bilden die Ausnehmungen oder die Vorsprünge des Schubregalmoduls eine Rasterung, die mit entsprechenden Positionen der Fächer in dem Schubregalmodul korrespondiert.

Eine Weiterbildung des erfindungsgemäßen Lagers ist dadurch gekennzeichnet, dass zu der zweiten Raumrichtung senkrecht angeordnete Rückseiten der in das Gehäuse eingeschobenen Schubregalmodule eine zweite Frontebene bilden, welche auf der der ersten Frontebene gegenüberliegenden Seite des Gehäuses angeordnet ist. Ein den Zugriff auf ein ausgewähltes Fach freigebendes zweites Bediengerät ist vor der zweiten Frontebene entlang der ersten Raumrichtung (x) bewegbar. Ein das ausgewählte Fach enthaltendes Schubregalmodul kann aus dem Gehäuse herausbewegt werden, sofern das zweite Bediengerät vor der zweiten Frontebene an diesem Schubregalmodul positioniert ist, wobei das Schubregalmodul soweit herausbewegt werden kann, dass sich das ausgewählte Fach vor der zweiten Frontebene befindet. "Vor" der zweiten Frontebene bedeutet hier, dass sich das ausgewählte Fach jenseits des Gehäuses befindet. Das zweite Bediengerät weist bei dieser Ausführungsform ebenfalls eine Verschließvorrichtung auf, die die offenen Seiten der Fächer des vor die zweite Frontebene herausbewegten Teils des Schubregalmoduls abdeckt und die derart von der Steuereinrichtung steuerbar ist, dass sie den Zugriff auf die offene Seite des ausgewählten Faches freigibt. Bei dieser Ausführungsform, welche zwei an gegenüberliegen Seiten des Gehäuses angeordnete Bediengeräte nutzt, kann gleichzeitig auf zwei ausgewählte Fächer zugegriffen werden. Beispielsweise kann das eine Bediengerät zum Freigeben des Zugriffs auf Fächer, in die ein Gegenstand eingelagert werden soll, verwendet werden, während das andere Bediengerät zum Freigeben des Zugriffs auf Fächer verwendet wird, aus denen ausgelagert werden soll.

Bei dem erfindungsgemäßen Verfahren zum Einlagern eines Gegenstands in ein Lager mit einer Vielzahl verschließbarer Fächer weist das Lager mehrere entlang einer ersten Raumrichtung (x) nebeneinander angeordnete Schubregalmodule auf, die jeweils oder gemeinsam in einem Gehäuse aufgenommen sind, wobei die Schubregalmodule in einer zu der ersten Raumrichtung (x) senkrechten zweiten Raumrichtung (y) aus dem Gehäuse heraus bewegbar sind, wobei jedes Schubregalmodul in eine Mehrzahl von einseitig offenen Fächern derart unterteilt ist, dass die offenen Seiten aller Fächer in einer zu der ersten Raumrichtung (x) senkrechten Begrenzungsebene des Schubregalmoduls liegen, so dass die offenen Seiten der Fächer eines in das Gehäuse eingeschobenen Schubregalmoduls durch eine Wandung des Gehäuses oder eine Wandung eines benachbarten Schubregalmoduls verschlossen sind, wobei zu der zweiten Raumrichtung (y) senkrecht angeordnete Frontseiten der in das Gehäuse eingeschobenen Schubregalmodule eine Frontebene bilden. Das Lager weist ferner ein Bediengerät auf, welches vor der Frontebene entlang der ersten Raumrichtung (x) bewegbar ist, wobei ein Schubregalmodul aus dem Gehäuse herausbewegt werden kann, sofern das Bediengerät an diesem Schubregalmodul positioniert ist, wobei das Bediengerät eine Verschließvorrichtung aufweist, die die offenen Seiten der Fächer des vor die Frontebene bewegten Teils des Schubregalmoduls abdeckt. Bei diesem Verfahren werden zunächst einen einzulagernden Gegenstand identifizierende Daten erfasst und einer elektronischen Steuereinrichtung des Lagers eingegeben. Dann wird dem Gegenstand ein ausgewähltes Fach des Lagers zugewiesen und die den Gegenstand identifizierenden Daten werden in Zuordnung zu Daten, die das ausgewählte Fach kennzeichnen, in der Steuereinrichtung gespeichert. Dann wird das Bediengerät durch Bewegen in der ersten Raumrichtung (x) an dem das ausgewählte Fach enthaltenden Schubregalmodul positioniert. Das Schubregalmodul wird soweit aus dem Gehäuse herausbewegt, dass sich das ausgewählte Fach vor der Frontebene befindet. Dann wird die Schließvorrichtung des Bediengeräts derart von der Steuereinrichtung gesteuert, dass sie den Zugriff auf die offene Seite des ausgewählten Faches freigibt. Schließlich wird der Gegenstand in das ausgewählte Fach eingelagert.

Bei einer bevorzugten Weiterbildung werden die den einzulagernden Gegenstand identifizierenden Daten erfasst, indem ein Identifikationscode des Gegenstands manuell von einem Bediener eingegeben oder ein auf dem Gegenstand aufgebrachter alphanumerischer Code oder ein Strichcode maschinell gelesen wird. Vorzugsweise werden zusätzlich Abmessungen des einzulagernden Gegenstands erfasst und wird das ausgewählte Fach des Lagers in Abhängigkeit von den erfassten Abmessungen des Gegenstands derart zugewiesen, dass die im Lager zur Verfügung stehenden Lagervolumina optimal ausgenutzt werden. Eine raumsparende Lagerung der Gegenstände erreicht man insbesondere dadurch, dass in Abhängigkeit von der erfassten Höhe des einzulagernden Gegenstands ein Fach ausgewählt wird, dass nur geringfügig höher ist. Gleiches gilt für die erfasst Breite des Gegenstands und die Breite des ausgewählten Fachs. Sofern unterschiedlich tiefe Fächer, das heißt unterschiedlich breite Schubregalmodule eingesetzt werden, kann auch eine Raumoptimierung in allen drei Raumrichtungen vorgesehen sein.

Die Lagerung der Gegenstände in dem Lager kann nach dem chaotischen Prinzip erfolgen, bei dem die Auswahl der Fächer für die Lagerung der Gegenstände ausschließlich in Abhängigkeit von den erfassten Abmessungen der Gegenstände erfolgt. Bei einer alternativen Ausführungsform, bei der es weniger auf die Raumersparnis ankommt oder bei der die Gegenstände nur wenige vorgegebene Außenabmessungen haben können, kann ein von anderen Eigenschaften der Gegenstände abhängiges Ordnungsprinzip für die Lagerung gewählt werden.

Bei einem entsprechenden Verfahren zum Auslagern eines Gegenstands aus einem Lager mit einer Vielzahl verschließbarer Fächer, wobei das Lager die oben genannten Merkmale aufweist, werden zunächst den auszulagernden Gegenstand identifizierende Daten einer elektronischen Steuereinrichtung des Lagers eingegeben, beispielsweise durch einen Bediener. Dann wird von der Steuereinrichtung auf der Grundlage der den auszulagernden Gegenstand identifizierenden Daten ein ausgewähltes Fach ermittelt, in dem der auszulagernde Gegenstand gelagert ist. Das Bediengerät wird durch Bewegen in der ersten Raumrichtung an dem das ausgewählte Fach enthaltenden Schubregalmodul positioniert. Das Schubregalmodul wird dann so weit aus dem Gehäuse herausbewegt, dass sich das ausgewählte Fach vor der Frontebene befindet. Dann wird die Schließvorrichtung des Bediengeräts derart von der Steuereinrichtung gesteuert, dass sie den Zugriff auf die offene Seite des ausgewählten Faches freigibt. Schließlich wird der Gegenstand aus dem ausgewählten Fach entnommen.

Sowohl bei dem Einlagerungsverfahren als auch bei dem Auslagerungsverfahren wird bei einer Ausführungsform das Bediengerät manuell bewegt, wobei eine Brems- und Arretiervorrichtung des Bediengeräts durch die Steuereinrichtung derart angesteuert wird, dass das Bediengerät an dem das ausgewählte Fach enthaltenden Schubregalmodul positioniert wird. Vorzugsweise wird das Schubregalmodul ebenfalls manuell bewegt, wobei eine weitere Brems- und Arretiervorrichtung des Bediengeräts durch die Steuereinrichtung derart angesteuert wird, dass das ausgewählte Fach vor der Frontebene positioniert wird. Schließlich ist bei der bevorzugten Ausführungsform vorgesehen, dass die Schließvorrichtung des Bediengeräts derart von der Steuereinrichtung gesteuert wird, dass sie den Zugriff auf die offene Seite des ausgewählten Faches erst freigibt, nachdem der Bediener einen Zugriffberechtigungscode eingegeben hat.

Vorteilhafte und/oder bevorzugte Weiterbildungen der Erfindung sind in den Unteransprüchen gekennzeichnet.

Im Folgenden wird die Erfindung anhand von in den Zeichnungen dargestellten bevorzugten Ausführungsformen näher erläutert. In den Zeichnungen zeigen:
Figur 1 eine schematische perspektivische Darstellung einer Ausführungsform des erfindungsgemäßen Lagers mit drei nebeneinander angeordneten Schubregalmodulen und einem vor der Frontebene verfahrbaren Bediengerät, wobei das rechte Schubregalmodul nach vorn herausgezogen ist;
Figuren 2A bis 2D das in Figur 1 gezeigte Lager in vier Phasen eines Bewegungsablaufs zum Zugreifen auf ein ausgewähltes Fach im rechten Schubregalmodul;
Figur 3A eine Frontansicht des in Figur 1 gezeigten Lagers in der in der Figur 2A gezeigten Phase des Bewegungsablaufs;
Figur 3B eine Draufsicht auf das Lager in der in Figur 2A gezeigten Phase des Bewegungsablaufs;
Figur 4 eine Draufsicht auf eine alternative Ausführungsform eines erfindungsgemäßen Lagers mit zwei Bediengeräten;
Figur 5 eine schematische Darstellung eines horizontalen Schnitts durch ein teilweise herausgezogenes Schubregalmodul mit einem an der Begrenzungsebene angeordneten Bediengerät mit einer ersten Ausführungsform einer Verschließvorrichtung, die eine bewegbare Abdeckplatte umfasst;
Figur 6 eine schematische Darstellung eines horizontalen Schnittes durch ein teilweise herausgezogenes Schubregalmodul mit einem an der Begrenzungsebene angeordneten Bediengerät mit einer zweiten Ausführungsform einer Verschließvorrichtung, die einen Rollladen mit einer gehäuseseitig angeordneten Aufrollvorrichtung umfasst; und
Figur 7 eine schematische Darstellung eines horizontalen Schnitts durch ein teilweise herausgezogenes Schubregalmodul mit einem an der Begrenzungsebene angeordneten Bediengerät mit einer dritten Ausführungsform einer Verschließvorrichtung, die einen Rollladen mit einer frontseitig angeordneten Aufrollvorrichtung umfasst.

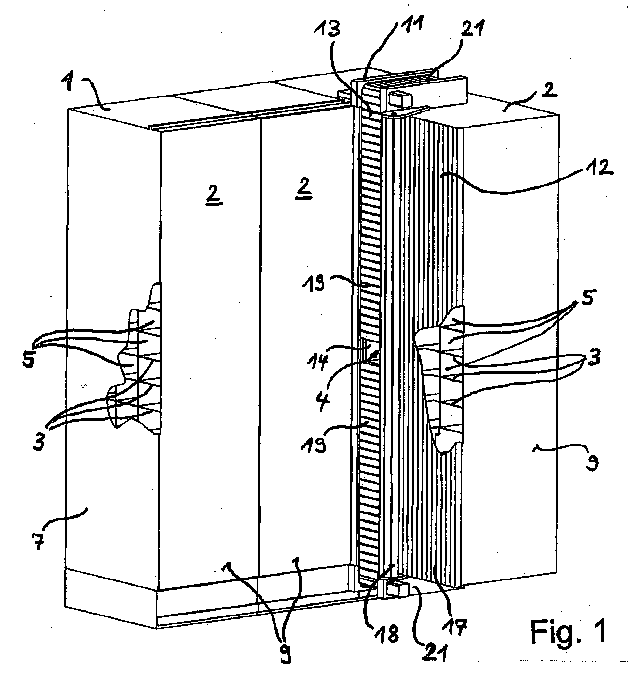

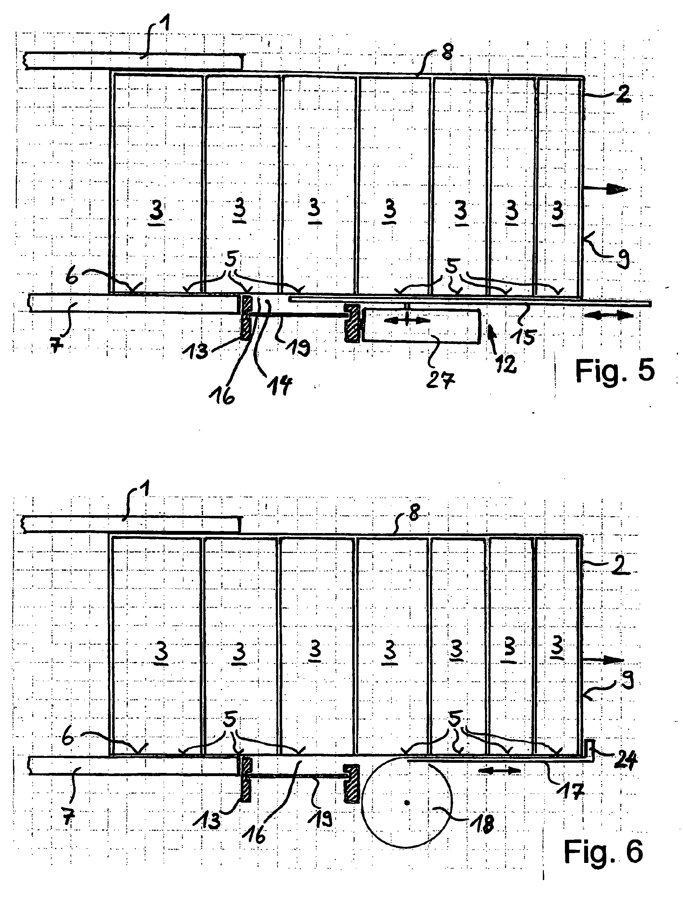

Die in den Figuren 1, 2A bis 2D und 3A und 3B dargestellte erste Ausführungsform eines erfindungsgemäßen Lagers weist ein Gehäuse 1 auf, welches drei nebeneinander angeordnete Schubregalmodule 2 aufnimmt. Das Gehäuse 2 ist derart modular gestaltet, dass das Regal durch Anfügen weiterer Gehäusemodule mit darin enthaltenen Schubregalmodulen 2 erweitert werden kann. Die Schubregalmodule 2 sind in dem Gehäuse auf Führungsschienen, vorzugsweise mit Rollen, gelagert und erstrecken sich nahezu über die gesamte Höhe des Gehäuses 1. Bei der gezeigten Ausführungsform sind die Schubregalmodule 2 in Fächer 3 unterteilt, wie in Figur 1 in dem Bereich des herausgebrochenen Abschnitts der Wandung 7 des Gehäuses bzw. in dem herausgebrochenen Abschnitt des Rollladens 17 zu erkennen ist. Bei dem hier dargestellten Ausführungsbeispiel sind die Fächer 3 von gleicher Breite und Höhe. Bei anderen Ausführungsformen können Fächer unterschiedlicher Höhe und Breite in beliebiger Weise innerhalb des Schubregalmoduls 2 angeordnet sein, wobei die Schubregalmodule in unterschiedlicher Weise in Fächer aufgeteilt sein können. Bei dem gezeigten Ausführungsbeispiel erstrecken sich die Fächer nahezu über die gesamte Breite des jeweiligen Schubregalmoduls 2 und weisen an ihrer linken Stirnfläche eine offene Seite 5 auf. An der nicht sichtbaren rechten Seite bilden die Wandungen der Fächer 3 eine Wandung 8 des Schubregalmoduls (welche beispielsweise in den Figuren 5 bis 7 dargestellt ist).

Die einzelnen Schubregalmodule 2 können zusätzlich durch eine Wandung des Gehäuses 1 getrennt sein. Aufgrund der von den Wandungen der Fächer 3 gebildeten Wandung 8 jedes Schubregalmoduls 2 können allerdings diese Gehäusewandungen zwischen den Schubregalmodulen 2 entfallen. Lediglich das am weitesten links angeordnete Schubregalmodul 2 muss durch eine Wandung 7 des Gehäuses 1 verschlossen werden. Diese Wandung 7 braucht selbstverständlich nicht aus einem durchgehenden Material gefertigt zu sein; sie kann auch die Form eines Gitters haben. Die Wandung 7 dient lediglich dazu, den Zugriff auf die Fächer 3 des am weitesten links angeordneten Schubregalmoduls 2 zu verhindern. Das Gehäuse 1 umfasst neben der Wandung 7 und ggf. weiteren Wandungen, wie beispielsweise einer Rückwand, eine stabile Tragkonstruktion zum Lagern der Schubregalmodule 2, welche hängend und/oder stehend gelagert und geführt sein können. Ferner weist das Gehäuse 1 Führungsschienen zur Aufnahme eines Bediengeräts 11 auf, wobei in den Figuren 1, 2A-2D und 3A, 3B eine auf der Oberseite des Gehäuses 1 angeordnete erste Schiene und eine an der Frontseite in der Nähe des Bodens angeordnete zweite Schiene sichtbar sind.

Bei der bevorzugten Ausführungsform des erfindungsgemäßen Lagers enthalten weder das Gehäuse 1 noch die Schubregalmodule 2 Steuerantriebe oder Sensoren; vielmehr sind sämtliche zum Betrieb des Lagers erforderlichen Sensoren und Aktoren in dem Bediengerät 11 untergebracht. Dies hat zum einen den Vorteil, dass die Schubregalmodule 2 relativ preiswert ausgeführt werden können und dass das Lager modular erweitert werden kann, ohne dass die Steueranordnung geändert zu werden braucht. Zum anderen hat dies den Vorteil, dass eine verzweigte Verkabelungsstruktur innerhalb des Lagergehäuses vermieden werden kann. Es sind lediglich Versorgungsleitungen und Signalleitungen zum Bediengerät 11 zu führen. Das Bediengerät kann auch die Steuereinrichtung, die vorzugsweise einen Computer mit diversen Peripheriegeräten umfasst, enthalten. Vorzugsweise ist jedoch ein Teil der Steuereinrichtung mit Bediener-Eingabe- und -Ausgabe-Einrichtungen in einer separaten, feststehenden Einheit untergebracht. Diese Einheit der Steuereinrichtung kann entweder am Gehäuse 1 befestigt oder als separate Einheit neben dem Gehäuse 1 angeordnet sein. In den schematischen Zeichnungen der Figuren sind weder die in dem Bediengerät 11 enthaltenen Teile der Steuereinrichtung noch die separaten feststehenden Teile, beispielsweise die Bedienerkonsole, dargestellt.

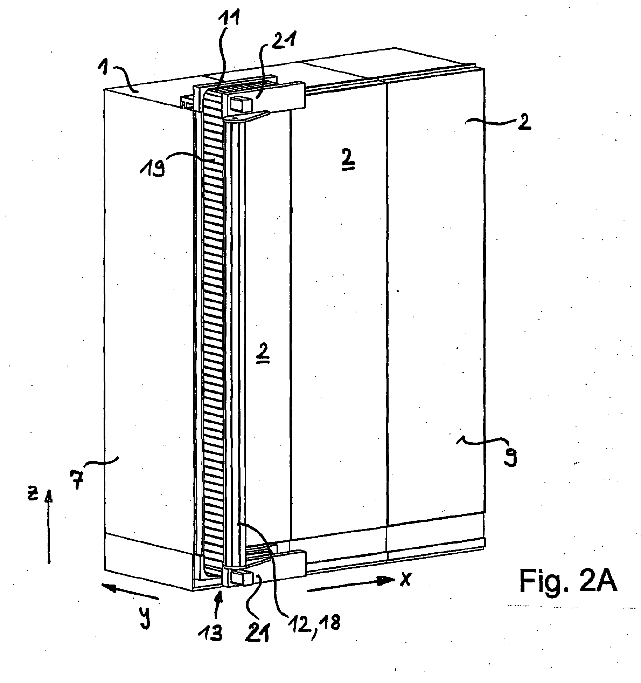

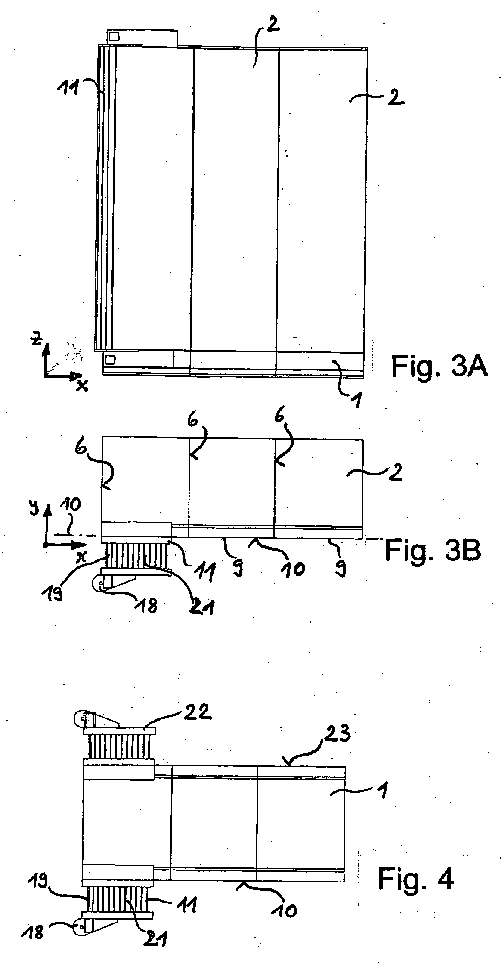

Nachfolgend sollen der Aufbau und die Funktion des Bediengeräts 11 insbesondere anhand des Bewegungsablaufs der Figuren 2A bis 2D erläutert werden. In den Figuren 2A bis 2D ist dargestellt, wie der Zugriff auf ein in dem rechten Schubregalmodul 2 enthaltenes ausgewähltes Fach 4 (dieses Fach ist in Figur 1 gezeigt) freigegeben wird. In der in Figur 2A dargestellten Ausgangsstellung befindet sich das Bediengerät 11 beispielsweise am linken Rand vor dem linken Schubregalmodul 2. Sämtliche drei Schubregalmodule 2 sind vollständig in das Gehäuse 1 eingeschoben. Die parallel angeordneten drei Frontseiten 9 der Schubregalmodule 2 bilden eine Frontebene 10 (vgl. Fig. 3B), vor der das Bediengerät 11 in einer mit x bezeichneten ersten Raumrichtung bewegt werden kann.

Wenn nun beispielsweise ein Bediener einen Zugriff auf das (in Figur 1 dargestellte) ausgewählte Fach 4 wünscht oder wenn ein Bediener Zugriff auf einen bestimmten Gegenstand wünscht, der in dem ausgewählten Fach 4 gelagert ist, so gibt der Bediener entweder eine Kennzeichnung des ausgewählten Fachs 4 oder eine Identifikation des darin gelagerten Gegenstands an einer Bedienerkonsole der Steuereinrichtung ein. Dies erfolgt typischerweise mit Hilfe einer Eingabevorrichtung, wobei die Eingabe durch Ausgaben eines Bildschirms unterstützt wird. Sofern der Bediener beispielsweise die Identifikation eines Gegenstands eingibt, auf den er zuzugreifen wünscht, braucht der Bediener nicht zu wissen, in welchem Schubregalmodul 2 und in welchem Fach 3 innerhalb des Schubregalmoduls 2 dieser Gegenstand gelagert ist. Vorzugsweise kennt die Steuereinrichtung die Belegung der einzelnen Fächer 3 der Schubregalmodule 2. Wenn dann der Bediener die Identifikation des gewünschten Gegenstands eingegeben hat, so kann die Steuereinrichtung über den Bildschirm oder andere Signaleinrichtungen (z. B. an dem Bediengerät 11 angebrachte Leuchtanzeigen) anzeigen, in welchem Schubregalmodul und in welchem Fach innerhalb des Schubregalmoduls sich der gewünschte Gegenstand befindet. Dies sei im vorliegenden Beispiel ein ausgewähltes Fach 4 in dem am weitesten rechts angeordneten Schubregalmodul 2.

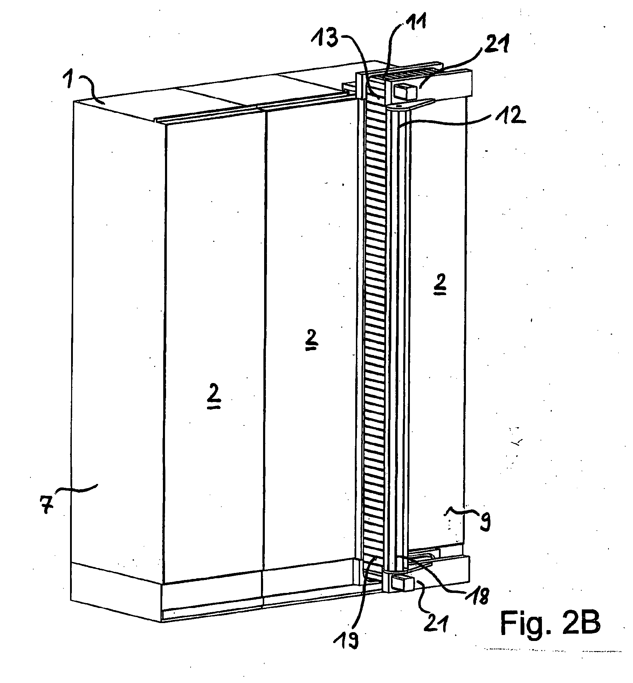

Um den Zugriff auf das ausgewählte Fach 4 innerhalb des rechten Schubregalmoduls 2 zu erlangen, wird zunächst das Bediengerät 11 in der x-Richtung soweit nach rechts bewegt, dass es sich an einer vorgegebenen Position vor dem rechten Schubregalmodul 2 befindet. Diese Position ist in Figur 2B dargestellt. Das Bediengerät 11 ist dabei so positioniert, dass das rechte Schubregalmodul 2 rechts neben dem Bediengerät 11 nach vorn herausgezogen werden kann (dies ist bei der schematischen Darstellung nicht exakt zu erkennen). Vorzugsweise wird das Bediengerät 11 in der x-Richtung manuell durch den Bediener bewegt. Dabei erfassen in dem Bediengerät 11 angeordnete Sensoren diese Bewegung entlang der Schubregalmodul-Frontseiten 9. Die Schubregalmodul-Frontseiten 9 weisen beispielsweise Markierungen auf, anhand derer Sensoren des Bediengeräts 11 erfassen können, ob sich das Bediengerät in der richtigen Relativposition zu dem gewünschten Schubregalmodul 2 befindet. Sobald dies der Fall ist, kann beispielsweise das Bediengerät 11 an der korrekten Position abgebremst und arretiert werden. Die dazu erforderlichen Stellvorrichtungen sind ebenfalls in dem Bediengerät 11 enthalten. Es ist denkbar, dass dem Bediener mit Hilfe einer Anzeige angezeigt wird, dass er sich der richtigen Position nähert. Es ist aber auch denkbar, dass der Bediener das Bediengerät einfach nur in der x-Richtung bewegt, bis die Arretierung bzw. Abbremsung erfolgt.

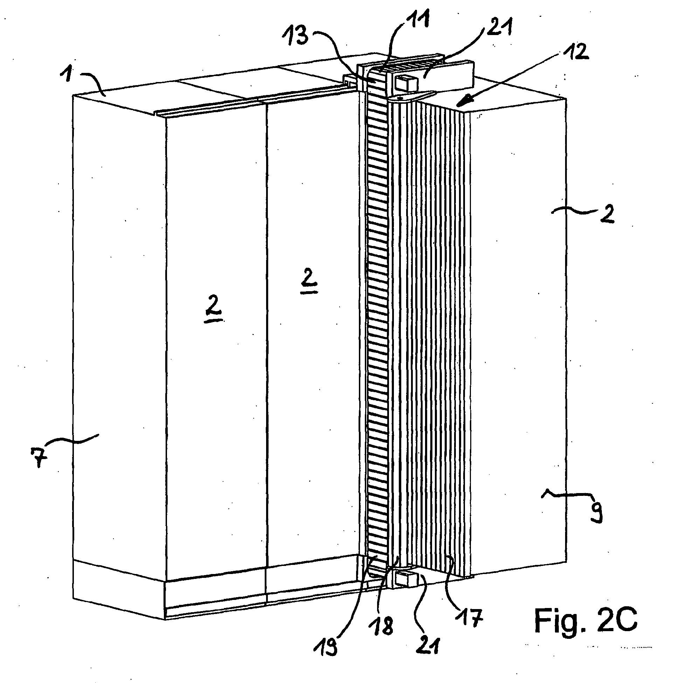

Sobald das Bediengerät 11, wie in Figur 2B gezeigt, an der richtigen Position relativ zu dem gewünschten Schubregalmodul 2 positioniert ist, wird das gewünschte Schubregalmodul 2 nach vorn (das heißt in der y-Richtung) herausgezogen. Dabei wird das Schubregalmodul 2 soweit nach vorn herausgezogen, dass sich das ausgewählte Fach 4 (in dem sich der gewünschte Gegenstand befindet) vor der Frontebene 10 befindet, die aus den Frontseiten9 der vollständig in dem Regal 1 aufgenommenen Schubregalmodule 2 gebildet wird. Diese Position des herausgezogenen Schubregalmoduls 2 ist in Figur 2C dargestellt. Hierbei ist zu erkennen, dass die offenen Seiten 5 der in dem Schubregalmodul 2 enthaltenen Fächer 3 (vgl. hierzu Figur 1) von einem Rollladen 17 verschlossen sind, welcher an dem linken Rand der Frontseite 9 des Schubregalmoduls 2 eingreift (beispielsweise sich einhakt) und mit der Frontseite 9 des Schubregalmoduls 2 nach vorn gezogen wird, wobei sich der Rollladen 17 von einer zugehörigen Aufrollvorrichtung 18 abrollt, wobei die Aufrollvorrichtung 18 benachbart zu einer Türvorrichtung 13 angeordnet ist. Die Türvorrichtung 13 (vgl. Figur 1) weist zwei schmale vertikal aufeinander zu verfahrbare Rollläden 19 auf, deren Aufrollvorrichtungen 21 sich über bzw. unter dem Schubregalmodul 2 an dem Bediengerät 11 befinden.

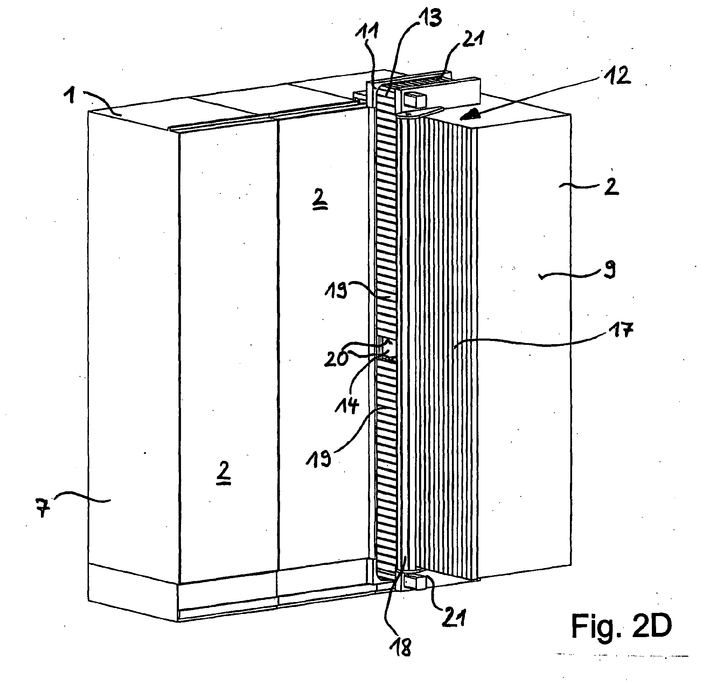

Nachdem das Schubregalmodul 2 soweit aus dem Gehäuse 1 herausgezogen wurde, dass sich das ausgewählte Fach 4 in y-Richtung vor der Frontebene 10 und somit in x-Richtung hinter der Türvorrichtung 13 mit den vertikal verfahrbaren Rollläden 19 befindet, werden die beiden Rollläden 19 der Türvorrichtung 13 unmittelbar vor dem ausgewählten Fach 4 positioniert und soweit auseinander gefahren, dass sich vor dem ausgewählten Fach 4 ein Fenster 14 öffnet. Dies ist in Figur 2D dargestellt, wobei der Zustand gemäß Figur 2D dem der Figur 1 entspricht. Das sich vor dem ausgewählten Fach 4 öffnende Fenster 14 wird bei dem dargestellten Ausführungsbeispiel seitlich von den Rändern der Türvorrichtung 13 des Bediengeräts 11 und oben und unten von den Rändern 20 der Rollläden 19 begrenzt. Bei dem dargestellten Ausführungsbeispiel weist das Fenster 14 somit stets die gleiche Breite auf, kann aber unterschiedlich hoch sein. Sofern bei diesem Ausführungsbeispiel gewünscht wird, dass über das Fenster 14 stets auf lediglich ein ausgewähltes Fach 4 der Fächer 3 des Schubregalmoduls 2 zugegriffen werden kann, so sollten die Fächer 3 sämtlicher Schubregalmodule 2 von gleicher Breite sein. Selbstverständlich können die Fächer unterschiedlich hoch sein. Bei anderen Ausführungsformen, bei denen die Fächer 3 auch unterschiedlich breit sein können, sollte die Breite des Fensters 14 der Türvorrichtung 13 an die Breite der breitesten Fächer 3 angepasst sein. Selbstverständlich ist dann bei dieser Ausführungsform bei schmaleren Fächern auch ein Zugriff auf dem ausgewählten Fach 4 benachbarte Fächer 3 möglich. Um dies zu vermeiden, könnte die Türvorrichtung 13 noch eine weitere horizontale Schiebetür aufweisen, die das zwischen den Rollläden 19 geöffnete Fenster 14 seitlich teilweise verschließen kann. Dies wäre allerdings eine relativ aufwändige Lösung. Alternative Lösungen für die Gestaltung der Verschließvorrichtung des Bediengeräts, welche einerseits die Türvorrichtung 13 und andererseits die aus dem Rollladen 17 gebildete Abdeckvorrichtung 12 umfasst, werden anhand der Figuren 5 bis 7 weiter unten näher erläutert.

Bei dem bevorzugten Ausführungsbeispiel werden die Schubregalmodule 2 manuell nach vorn herausgezogen, wobei wiederum an dem Bediengerät 11 angebrachte Sensoren erfassen können, ob und wie weit ein Schubregalmodul 2 aus dem Gehäuse 1 herausgezogen worden ist. Darüber hinaus kann das Bediengerät 11 eine weitere Bremsvorrichtung und/oder Arretiervorrichtung aufweisen, die das Schubregalmodul 2 beim Herausziehen an einer Position abbremst bzw. arretiert, bei der sich das ausgewählte Fach 4 vor der Frontebene 10 und in x-Richtung hinter der Türvorrichtung 13 des Bediengeräts 11 befindet. Um dies zu ermöglichen, sind vorzugsweise an dem Schubregalmodul 2 Markierungen vorgesehen, anhand derer die Sensoren des Bediengeräts 11 die Stellung des Schubregalmoduls 2 erfassen können. Ferner können an dem Schubregalmodul 2 Ausnehmungen oder Vorsprünge vorhanden sein, welche in ihrer Position den in den Schubregalmodul 2 enthaltenen Fächern entsprechen und in welche entsprechende Arretiervorrichtungen des Bediengeräts 11 eingreifen können.

Die Rollläden 19, zwischen deren Rändern 20 das Fenster 14 vor dem ausgewählten Fach 4 geöffnet wird, werden vorzugsweise von zwei Antrieben angetrieben, die von der Steuereinrichtung angesteuert werden. Während des Positionierens des Bediengeräts 11 vor dem das ausgewählte Fach 4 enthaltenden Schubregalmodul 2 oder während des Herausziehens des Schubregalmoduls 2 sorgt die Steuereinrichtung dafür, dass die Ränder 20, welche hierbei noch aufeinander liegen, in einer vertikalen Höhe positioniert werden, die der Position des ausgewählten Fachs 4 entspricht. Beispielsweise werden sie in einer Höhe positioniert, die der Unterkante des ausgewählten Fachs 4 entspricht. Sobald dann das Schubregalmodul 2 bis zu der richtigen Position herausgezogen worden ist, sorgt die Steuereinrichtung dafür, dass die Rollläden 19 so angetrieben werden, dass sich das Fenster 14 vor dem ausgewählten Fach 4 öffnet.

Bei alternativen Ausführungsformen ist es denkbar, dass auch das Herausbewegen des das ausgewählte Fach enthaltenden Schubregalmoduls 2 von einem Antrieb gesteuert wird, der sich am Bediengerät 11 befindet und in geeigneter Weise in das Schubregalmodul 2 eingreift. Auch wäre es denkbar, dass die Positionierung des Bediengeräts 11 in der x-Richtung vor dem Schubregalmodul 2 durch einen weiteren Antrieb automatisch von der Steuereinrichtung gesteuert wird. Schließlich wäre es auch denkbar, dass die Entnahme einerseits und die Einlagerung der Gegenstände andererseits von einem automatisierten Bediengerät vorgenommen wird. Diese Weiterbildungen sind jedoch gegenwärtig nicht bevorzugt.

Die Figuren 3A und 3B zeigen eine Frontansicht und eine Draufsicht auf das in den Figuren 1 und 2A bis 2D dargestellte Lager, wobei in den Figuren 3A und 3B der in Figur 2A dargestellte Zustand gezeigt ist, bei dem sich das Bediengerät 11 vor dem am weitesten links angeordneten Schubregalmodul 2 befindet. Bei der in den Figuren 3A und 3B dargstellten Ausführungsform ist ein Bediengerät 11 vor den Frontseiten 9 der Schubregalmodule 2 in horizontaler x-Richtung verfahrbar. Die Schubregalmodule 2 sind in y-Richtung nach vorn aus dem Gehäuse 1 heraus bewegbar.

Figur 4 zeigt eine alternative Ausführungsform mit zwei Bediengeräten 11 und 22. Ein zusätzliches Bediengerät 22 ist vor den Rückseiten der Schubregalmodule 2 in x-Richtung verfahrbar. Bei dieser Ausführungsform können die Schubregalmodule in y-Richtung entweder nach vorn oder nach hinten aus dem Gehäuse 1 herausbewegt werden. Auf diese Weise kann das erste Bediengerät 11 vor einem ersten Schubregalmodul 2, welches nach vorn herausbewegt wird, positioniert werden und auf ein ausgewähltes Fach in dem Schubregalmodul 2 zugreifen. Gleichzeitig kann das zweite Bediengerät 22 vor der zweiten Frontebene 23 vor einem zweiten Schubregalmodul 2 positioniert werden und auf ein zweites ausgewähltes Fach dieses zweiten Schubregalmoduls 2 zugreifen. Beispielsweise kann das erste Bediengerät 11 den Zugriff auf ein ausgewähltes Fach zum Zwecke der Auslagerung eines Gegenstands freigeben, während das zweite Bediengerät den Zugriff auf ein anderes Fach in einem anderen Schubregalmodul zum Zwecke der Einlagerung eines Gegenstands freigibt.

In den Figuren 5 bis 7 sind schematisch drei Ausführungsformen einer Verschließvorrichtung des Bediengeräts 11 veranschaulicht, die neben einer Türvorrichtung 13 drei Ausführungsformen einer Abdeckvorrichtung 12 zum Abdecken der offenen Seiten der Fächer 3 eines Schubregalmoduls 2 aufweisen. Die schematischen Darstellungen der Figuren 5 bis 7 zeigen horizontale Schnitte durch ein Schubregalmodul 2 mit unterschiedlich breiten Fächern 3, welches zum Teil aus dem Gehäuse 1 herausgezogen ist. Die offenen Seiten 5 der einseitig offenen Fächer 3 bilden die Begrenzungsebene 6. Die geschlossenen Seiten bilden eine Wandung 8 des Schubregalmoduls 2. Das Bediengerät 11 ist benachbart zu der Begrenzungsebene 6 angeordnet und verschließt hierbei die offenen Seiten der Fächer 3 des aus dem Gehäuse 1 herausgezogenen Teils des Schubregalmoduls 2.

Figur 5 zeigt eine Ausführungsform, bei der das Bediengerät 11 neben der Türvorrichtung 13 mit den vertikal verfahrbaren Rollläden 19 eine Abdeckvorrichtung 12 aufweist, welche eine in y-Richtung verschiebbare Abdeckplatte 15 umfasst. Die Abdeckplatte 15 ist über einen als Kasten 27dargestellten Linearantrieb mit einer Seite der Türvorrichtung 13 verbunden. Die Abdeckplatte 15 weist in der y-Richtung eine Abmessung auf, die der Abmessung des Schubregalmoduls 2 in der y-Richtung abzüglich einer minimalen Breite des Fensters 14, das heißt der minimalen Breite eines Fachs 3, entspricht. Wenn auf ein ausgewähltes Fach vorgegebener Breite zugegriffen werden soll, wird die Abdeckplatte 15, welche sich hinter die Türvorrichtung 13, das heißt hinter die Rollläden 19 schiebt, so positioniert, dass zwischen der in Figur 5 links dargestellten Begrenzung der Türvorrichtung 13 und dem Rand der Abdeckplatte 15 ein Streifen 16 von einer Breite verbleibt, der der Breite des ausgewählten Faches 4 entspricht. Wenn dann das Schubregalmodul 2 soweit herausgezogen worden ist, dass das ausgewählte Fach 4 vor der Frontebene 10 des Gehäuses 1 positioniert ist, so befindet sich die offene Seite 5 des ausgewählten Faches 4 in dem Streifen 16. Anschließend öffnen sich die Rollläden 19 in vertikaler Richtung vor dem ausgewählten Fach, so dass ein Fenster 14 geöffnet wird, dessen Höhe der Höhe des ausgewählten Faches und dessen Breite der Breite des ausgewählten Faches entspricht.

Die in Figur 5 dargestellte Ausführungsform hat den Vorteil, dass nicht nur die Höhe des Fensters 14 sondern auch die Breite des Fensters beliebig eingestellt werden können, so dass Fächer 3 unterschiedlicher Höhe und Breite Verwendung finden können. Nachteilig bei dieser Ausführungsform ist es, dass die Abdeckplatte 15 sich auch dann in den Raum vor der Frontebene 10 des Gehäuses 1 erstreckt, wenn keines der Schubregalmodule 2 aus dem Gehäuse 1 herausgezogen ist.

Figur 6 zeigt eine schematische Darstellung einer Ausführungsform der Verschließvorrichtung des Bediengeräts 11, die der Ausführungsform der Figuren 1, 2A bis 2D und 3A, 3B entspricht. Die Türvorrichtung 13 mit den vertikal verfahrbaren Rollläden 19 hat hier eine Breite, die der maximalen Breite der Fächer 3 entspricht. Benachbart zu der Türvorrichtung 13 ist an dem Bediengerät 11 eine Aufrollvorrichtung 18 für einen horizontal nach vorn ausfahrbaren Rollladen 17 angeordnet. Der Rollladen 17 weist an seiner Frontseite eine Vorrichtung 24 auf, die an die Frontseite 9 eines herausgezogenen Schubregalmoduls 2 eingreift und dann beim Herausziehen des Schubregalmoduls 2 den Rollladen 17 aus der Aufrollvorrichtung 18 herauszieht. Beim Wieder-Einschieben des Schubregalmoduls 2 sorgt die Aufrollvorrichtung 18 dafür, dass der Rollladen 17 wieder eingerollt wird. Die in Figur 6 dargestellte Ausführungsform hat den Nachteil, dass die von der Türvorrichtung 13 geöffneten Fenster 14 stets die volle Breite der Türvorrichtung 13 aufweisen. Bei zwei schmaleren nebeneinander angeordneten Fächern 3 kann somit nicht gewährleistet werden, dass der Zugriff ausschließlich auf ein Fach ermöglicht wird. Allerdings hat die Ausführungsform gemäß Figur 6 den Vorteil, dass sie sich nur relativ wenig in den Raum vor dem Gehäuse 2 erstreckt, sofern keines der Schubregalmodule 2 herausgezogen ist.

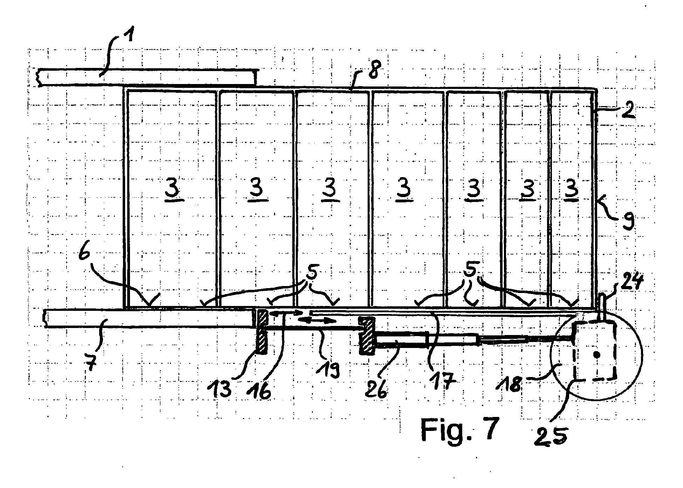

Figur 7 zeigt eine Ausführungsform, die die Vorteile der in den Figuren 5 und 5 gezeigten Ausführungsformen vereinigt. Bei der Ausführungsform gemäß Figur 7 schiebt sich ein horizontal verfahrbarer Rollladen 17 hinter die Türvorrichtung 13 mit ihren vertikal verfahrbaren Rollläden 19, so dass mit dem Rollladen 17 die Breite eines vor den offenen Seiten der Fächer 3 nicht abgedeckten Streifens 16 eingestellt werden kann. Die Breite des Streifens 16 bestimmt dann die Breite des Zugriffsfensters 14. Bei der Ausführungsform gemäß Figur 7 ist die Aufrollvorrichtung 18 für den Rollladen 17 neben der Frontseite 9 des herausgezogenen Schubregalmoduls 2 angeordnet. Mit Hilfe einer Vorrichtung 24 rastet die Aufrollvorrichtung 18 an der Frontseite 9 des Schubregalmoduls 2 ein, wenn dieses nach vorn herausgezogen wird. Mit den Bezugszeichen 26 ist eine Vorrichtung gekennzeichnet, die einerseits die Aufrollvorrichtung 18 fest mit dem Bediengerät 11 verbindet und die andererseits einen flexiblen Abstand zwischen der Türvorrichtung 13 und der Aufrollvorrichtung 18 gestattet.

Im Rahmen des Erfindungsgedankens sind zahlreiche alternative Ausführungsformen denkbar. Im Unterschied zu den in den Zeichnungen dargestellten Ausführungsbeispielen können die Schubregalmodule 2 von unterschiedlicher Breite sein, was zu unterschiedlich tiefen Fächern 3 führt. Außerdem ist es denkbar, dass auch anstelle eines Schubregalmoduls 2 zwei oder mehr übereinander gestapelte Schubregalmodule vorgesehen sind, wobei beispielsweise nach dem Positionieren des Bediengeräts 11 vor diesen vertikal übereinander gestapelten Schubregalmodulen jeweils nur dasjenige Schubregalmodul nach vorn herausbewegt wird, welches das ausgewählte Fach enthält. Bei dieser Ausführungsform ist es denkbar, dass anstelle einer sich über die gesamte Höhe des Stapels der Schubregalmodule erstreckenden Abdeckvorrichtung, beispielsweise anstelle eines sich über die gesamte Höhe erstreckenden Rollladens, mehrere weniger breite Abdeckvorrichtungen bzw. Rollläden verwendet werden, von denen sich jeweils eine(r) über die Breite eines der übereinander gestapelten Schubregalmodule 2 erstreckt. Anstelle der nebeneinander angeordneten Schubregalmodule 2, bei denen auf die Fächer 3 von einer Seite zugegriffen wird, können die Schubregalmodule 2 auch übereinander angeordnet sein, wobei dann auf die Fächer 3 von oben zugegriffen wird, das heißt die offenen Seiten 5 der Fächer 3 nach oben weisen.

Es sind auch Ausführungsformen denkbar, bei denen die Fächer 3 jeweils Schubladen enthalten, die durch das von dem Bediengerät 11 geöffnete Fenster 14 in der x-Richtung herausgezogen werden können, um den oder die darin gelagerten Gegenstände zu entnehmen oder einzulegen. Darüber hinaus sind auch Ausführungsformen denkbar, bei denen die offenen Seiten der Fächer zunächst jeweils eine eigene Klappe oder Tür aufweisen, welche sich nach dem Öffnen des Fensters 14 durch das Bediengerät ebenfalls öffnen, beispielsweise herausklappen, um den Zugriff auf das Fach freizugeben. In diesem Fall wird unter der "offenen Seite" der einseitig offenen Fächer diejenige Seite verstanden, die diese Klappe oder Tür aufweist.

## Patentansprüche

1. Lager mit einer Vielzahl verschließbarer Fächer (3), aufweisend:
mehrere entlang einer ersten Raumrichtung (x) nebeneinander angeordnete Schubregalmodule (2), die jeweils oder gemeinsam in einem Gehäuse (1) aufgenommen sind,
wobei die Schubregalmodule (2) in einer zu der ersten Raumrichtung (x) senkrechten zweiten Raumrichtung (y) aus dem Gehäuse (1) heraus bewegbar sind,
wobei jedes Schubregalmodul (2) in eine Mehrzahl von einseitig offenen Fächern (3) derart unterteilt ist, dass die offenen Seiten (5) aller Fächer (3) in einer zu der ersten Raumrichtung (x) senkrechten Begrenzungsebene (6) des Schubregalmoduls (2) liegen, so dass die offenen Seiten (5) der Fächer (3) eines in das Gehäuse (1) eingeschobenen Schubregalmoduls (2) durch eine Wandung (7) des Gehäuses (1) oder eine Wandung (8) eines benachbarten Schubregalmoduls (2) verschlossen sind,
wobei zu der zweiten Raumrichtung (y) senkrecht angeordnete Frontseiten (9) der in das Gehäuse (1) eingeschobenen Schubregalmodule (2) eine Frontebene (10) bilden, **dadurch gekennzeichnet, daß**
ein den Zugriff auf ein ausgewähltes Fach (4) freigebendes Bediengerät (11), welches vor der Frontebene (10) entlang der ersten Raumrichtung (x) bewegbar ist,
wobei ein das ausgewählte Fach (4) enthaltendes Schubregalmodul (2) aus dem Gehäuse (1) heraus bewegt werden kann, sofern das Bediengerät (11) an diesem Schubregalmodul (2) positioniert ist, wobei das Schubregalmodul (2) soweit heraus bewegt werden kann, dass sich das ausgewählte Fach (4) vor der Frontebene (10) befindet,
wobei das Bediengerät (11) eine Verschließvorrichtung (12, 13) aufweist, die die offenen Seiten (5) der Fächer (3, 4) des vor die Frontebene (10) herausbewegten Teils des Schubregalmoduls (2) abdeckt und die derart von einer elektronischen Steuereinrichtung steuerbar ist, dass sie den Zugriff auf die offene Seite des ausgewählten Faches (4) freigibt.

2. Lager nach Anspruch 1, **dadurch gekennzeichnet, dass** die Verschließvorrichtung umfasst:
eine sich in einer zu der ersten Raumrichtung (x) und der zweiten Raumrichtung (y) senkrechten dritten Raumrichtung (z) über die gesamte Abmessung des Schubregalmoduls (2) erstreckende Abdeckvorrichtung (12) zum Abdecken der offenen Seiten (5) der Fächer (3, 4) des vor die Frontebene (10) herausbewegten Teils des Schubregalmoduls (2), wobei die Abdeckvorrichtung (12) einen sich in der dritten Raumrichtung (z) erstreckenden Streifen (16) in der Begrenzungsebene (6) des heraus bewegten Schubregalmoduls (2) unabgedeckt lässt, der die offene Seite (5) des ausgewählten Faches (4) einschließt, und
eine den Streifen (16) überdeckende, von der elektronischen Steuereinrichtung gesteuerte Türvorrichtung (13), die ein Fenster (14) für den Zugriff auf die offene Seite des ausgewählten Faches (4) öffnet.

3. Lager nach Anspruch 2, **dadurch gekennzeichnet, dass** die Abdeckvorrichtung (12) eine mit der Türvorrichtung (13) verbundene, in der Begrenzungsebene (6) des herausbewegten Schubregalmoduls (2) liegende Abdeckplatte (15) aufweist, wobei die Abdeckplatte (15) beim Herausbewegen des Schubregalmoduls (2) derart positioniert wird, dass die Breite des Streifens (16) in der zweiten Raumrichtung (y) der Breite der offenen Seite des ausgewählten Faches (4) entspricht.

4. Lager nach Anspruch 2, **dadurch gekennzeichnet, dass** die Abdeckvorrichtung (12) einen mit der Türvorrichtung (13) verbundenen, in der Begrenzungsebene (6) des herausbewegten Schubregalmoduls (2) liegenden Rollladen (17) aufweist, wobei sich der Rollladen von einer benachbart zu der Türvorrichtung (13) angeordneten Aufrollvorrichtung (18) zu der Frontseite (9) des herausbewegten Schubregalmoduls (2) erstreckt.

5. Lager nach Anspruch 2, **dadurch gekennzeichnet, dass** die Abdeckvorrichtung (12) einen mit der Türvorrichtung (13) verbundenen, in der Begrenzungsebene (6) des herausbewegten Schubregalmoduls (2) liegenden Rollladen (17) aufweist, wobei sich der Rollladen (17) von einer an der Frontseite (9) des herausbewegten Schubregalmoduls (2) angeordneten Aufrollvorrichtung (18) bis zu dem Streifen (16) erstreckt, wobei der Rollladen (17) beim Herausbewegen des Schubregalmoduls (2) derart positioniert wird, dass die Breite des Streifens (16) in der zweiten Raumrichtung (y) der Breite der offenen Seite des ausgewählten Faches (4) entspricht.

6. Lager nach einem der Ansprüche 2 - 5, **dadurch gekennzeichnet,**
**dass** die Türvorrichtung (13) zwei in der dritten Raumrichtung (z) aufeinander zu bewegbare Schiebetüren oder Rollläden (19) umfasst. und
**dass** die Steuereinrichtung die Türvorrichtung (13) derart steuert, dass die einander zugewandten Ränder (20) der beiden Schiebetüren bzw. Rollläden (19) während des Positionierens des Bediengeräts (11) und/oder während des Herausziehens des Schubregalmoduls (2) in der dritten Raumrichtung (z) an einem der Position des ausgewählten Faches (4) entsprechenden Ort positioniert werden und das Fenster (14) geöffnet wird, sobald das Schubregalmodul (2) soweit herausgezogen ist, dass die offene Seite des ausgewählten Faches (4) hinter der Türvorrichtung (13) positioniert ist.

7. Lager nach einem der Ansprüche 1 - 6, **dadurch gekennzeichnet, dass** die elektronische Steuereinrichtung einen Speicher aufweist, in dem Daten, die jeweils ein bestimmtes Schubregalmodul und ein bestimmtes Fach in dem Schubregalmodul identifizieren, in Zuordnung zu Daten, die einen in dem bestimmten Fach einliegenden Gegenstand kennzeichnen, gespeichert sind, wobei diese einander zugeordneten Daten für sämtliche in dem Lager gelagerten Gegenstände gespeichert sind.

8. Lager nach einem der Ansprüche 1 - 7, **dadurch gekennzeichnet, dass** die Steuereinrichtung derart mit dem Bediengerät (11) gekoppelt ist, dass sie die korrekte Positionierung des Bediengeräts in der ersten Raumrichtung (x) erfassen kann.

9. Lager nach Anspruch 8, **dadurch gekennzeichnet, dass** das Bediengerät (11) eine Vorrichtung zum Erfassen der Position des aus dem Gehäuse heraus bewegten Schubregalmoduls (2) in der zweiten Raumrichtung (y) aufweist und die Steuereinrichtung derart mit dem Bediengerät (11) gekoppelt ist, dass sie die Position des Schubregalmoduls (2) in der zweiten Raumrichtung (y) erfassen kann.

10. Lager nach Anspruch 9, **dadurch gekennzeichnet, dass** das Steuereinrichtung die Verschließvorrichtung (12, 13) derart steuert, dass sie den Zugriff auf die offene Seite des ausgewählten Faches (4) freigibt, nachdem die Steuereinrichtung die korrekte Position des Bediengeräts und die korrekte Stellung des heraus bewegten Schubregalmoduls (2) erfasst hat.

11. Lager nach einem der Ansprüche 1 - 10, **dadurch gekennzeichnet, dass** die Schubregalmodule (2) manuell aus dem Gehäuse (1) herausziehbar und in das Gehäuse (1) einschiebbar sind und dass das Bediengerät (11) eine Arretiervorrichtung aufweist, die sichert, dass das heraus bewegte Schubregalmodul (2) bis zu einer Position herausgezogen werden kann, bei der sich das ausgewählte Fach (4) an einer vorgegebenen Position vor der Frontebene (10) befindet.

12. Lager nach einem der Ansprüche 1 - 11, **dadurch gekennzeichnet,**
**dass** zu der zweiten Raumrichtung (y) senkrecht angeordnete Rückseiten der in das Gehäuse (1) eingeschobenen Schubregalmodule (2) eine zweite Frontebene (23) bilden, und
**dass** ein den Zugriff auf ein ausgewähltes Fach (4) freigebendes zweites Bediengerät (22) vor der zweiten Frontebene (23) entlang der ersten Raumrichtung (x) bewegbar ist,
wobei ein das ausgewählte Fach (4) enthaltendes Schubregalmodul (2) aus dem Gehäuse (1) heraus bewegt werden kann, sofern das zweite Bediengerät (22) vor der zweiten Frontebene (23) an diesem Schubregalmodul (2) positioniert ist, wobei das Schubregalmodul (2) soweit heraus bewegt werden kann, dass sich das ausgewählte Fach (4) vor der zweiten Frontebene (23) befindet,
wobei das zweite Bediengerät (22) eine Verschließvorrichtung aufweist, die die offenen Seiten der Fächer des vor die zweite Frontebene (23) herausbewegten Teils des Schubregalmoduls (2) abdeckt und die derart von der Steuereinrichtung steuerbar ist, dass sie den Zugriff auf die offene Seite des ausgewählten Faches (4) freigibt.

13. Verfahren zum Einlagern eines Gegenstands in ein Lager mit einer Vielzahl verschließbarer Fächer (3),
wobei das Lager mehrere entlang einer ersten Raumrichtung (x) nebeneinander angeordnete Schubregalmodule (2) aufweist, die jeweils oder gemeinsam in einem Gehäuse (1) aufgenommen sind, wobei die Schubregalmodule (2) in einer zu der ersten Raumrichtung (x) senkrechten zweiten Raumrichtung (y) aus dem Gehäuse (1) heraus bewegbar sind, wobei jedes Schubregalmodul (2) in eine Mehrzahl von einseitig offenen Fächern (3) derart unterteilt ist, dass die offenen Seiten (5) aller Fäche (3) in einer zu der ersten Raumrichtung (x) senkrechten Begrenzungsebene (6) des Schubregalmoduls (2) liegen, so dass die offenen Seiten (5) der Fächer (3) eines in das Gehäuse (1) eingeschobenen Schubregalmoduls (2) durch eine Wandung (7) des Gehäuses (1) oder eine Wandung (8) eines benachbarten Schubregalmoduls (2) verschlossen sind, wobei zu der zweiten Raumrichtung (y) senkrecht angeordnete Frontseiten (9) der in das Gehäuse (1) eingeschobenen Schubregalmodule (2) eine Frontebene (10) bilden, **dadurch gekennzeichnet, daß**
das Lager ferner ein Bediengerät (11) aufweist, welches vor der Frontebene (10) entlang der ersten Raumrichtung (x) bewegbar ist, wobei ein Schubregalmodul (2) aus dem Gehäuse (1) heraus bewegt werden kann, sofern das Bediengerät (11) an diesem Schubregalmodul (2) positioniert ist, wobei das Bediengerät (11) eine Verschließvorrichtung (12, 13) aufweist, die die offenen Seiten (5) der Fächer (3, 4) des vor die Frontebene (10) bewegten Teils des Schubregalmoduls (2) abdeckt, wobei:
a) einen einzulagernden Gegenstand identifizierende Daten erfasst und einer elektronischen Steuereinrichtung des Lagers eingegeben werden,
b) dem Gegenstand ein ausgewähltes Fach (4) des Lagers zugewiesen wird und die den Gegenstand identifizierenden Daten in Zuordnung zu Daten, die das ausgewählte Fach (4) kennzeichnen, in der Steuereinrichtung gespeichert werden,
c) das Bediengerät (11) durch Bewegen in der ersten Raumrichtung (x) an dem das ausgewählte Fach (4) enthaltenden Schubregalmodul (2) positioniert wird,
d) das Schubregalmodul (2) soweit aus dem Gehäuse (1) heraus bewegt wird, dass sich das ausgewählte Fach (4) vor der Frontebene (10) befindet,
e) die Schließvorrichtung (12, 13) des Bediengeräts (11) derart von der Steuereinrichtung gesteuert wird, dass sie den Zugriff auf die offene Seite (5) des ausgewählten Fachs (4) freigibt, und
f) der Gegenstand in das ausgewählte Fach (4) eingelagert wird.

14. Verfahren zum Einlagern nach Anspruch 13, **dadurch gekennzeichnet, dass** im Schritt a) die den einzulagernden identifizierenden Daten erfasst werden, indem ein Identifikationscode des Gegenstands manuell von einem Bediener eingegeben oder ein auf dem Gegenstand aufgebrachter alphanumerischer Code oder ein Strichcode maschinell gelesen wird.

15. Verfahren zum Einlagern nach Anspruch 13 oder 14, **dadurch gekennzeichnet, dass** zusätzlich im Schritt a) Abmessungen des einzulagernden Gegenstands erfasst werden und dass im Schritt b) das ausgewählte Fach (4) des Lagers in Abhängigkeit von den erfassten Abmessungen des Gegenstands derart zugewiesen wird, dass die im Lager zur Verfügung stehenden Lagervolumina optimal ausgenutzt werden.

16. Verfahren zum Auslagern eines Gegenstands aus einem Lager mit einer Vielzahl verschließbarer Fächer (3),
wobei das Lager mehrere entlang einer ersten Raumrichtung (x) nebeneinander angeordnete Schubregalmodule (2) aufweist, die jeweils oder gemeinsam in einem Gehäuse (1) aufgenommen sind, wobei die Schubregalmodule (2) in einer zu der ersten Raumrichtung (x) senkrechten zweiten Raumrichtung (y) aus dem Gehäuse (1) heraus bewegbar sind, wobei jedes Schubregalmodul (2) in eine Mehrzahl von einseitig offenen Fächern (3) derart unterteilt ist, dass die offenen Seiten (5) aller Fächer (3) in einer zu der ersten Raumrichtung (x) senkrechten Begrenzungsebene (6) des Schubregalmoduls (2) liegen, so dass die offenen Seiten (5) der Fächer (3) eines in das Gehäuse (1) eingeschobenen Schubregalmoduls durch eine Wandung (7) des Gehäuses (1) oder eine Wandung (8) eines benachbarten Schubregalmoduls (2) verschlossen sind, wobei zu der zweiten Raumrichtung (y) senkrecht angeordnete Frontseiten (9) der in das Gehäuse (1) eingeschobenen Schubregalmodule (2) eine Frontebene (10) bilden, **dadurch gekennzeichnet, daß**
das Lager ferner ein Bediengerät (11) aufweist, welches vor der Frontebene (10) entlang der ersten Raumrichtung (x) bewegbar ist, wobei ein Schubregalmodul (2) aus dem Gehäuse (1) heraus bewegt werden kann, sofern das Bediengerät (11) an diesem Schubregalmodul (2) positioniert ist, wobei das Bediengerät (11) eine Verschließvorrichtung (12, 13) aufweist, die die offenen Seiten (5) der Fächer (3, 4) des vor die Fronteben (10) bewegten Teils des Schubregalmoduls (2) abdeckt, wobei:
a) den auszulagernden Gegenstand identifizierende Daten einer elektronischen Steuereinrichtung des Lagers eingegeben werden,
b) von der Steuereinrichtung auf der Grundlage der den auszulagernden Gegenstand identifizierenden Daten ein ausgewähltes Fach (4) ermittelt wird, in dem der auszulagernde Gegenstand gelagert ist,
c) das Bediengerät (11) durch Bewegen in der ersten Raumrichtung (x) an dem das ausgewählte Fach (4) enthaltenden Schubregalmodul (2) positioniert wird,
d) das Schubregalmodul (2) soweit aus dem Gehäuse (1) heraus bewegt wird, dass sich das ausgewählte Fach (4) vor der Frontebene (10) befindet,
e) die Schließvorrichtung (12, 13) des Bediengeräts (11) derart von der Steuereinrichtung gesteuert wird, dass sie den Zugriff auf die offene Seite (5) des ausgewählten Faches (4) freigibt, und
f) der Gegenstand aus dem ausgewählten Fach (4) entnommen wird.

17. Verfahren zum Einlagern nach einem der Ansprüche 13 - 15 oder zum Auslagern nach Anspruch 16, **dadurch gekennzeichnet,**
**dass** im Schritt c) das Bediengerät manuell bewegt wird, wobei eine Brems- und Arretiervorrichtung des Bediengeräts (11) durch die Steuereinrichtung derart angesteuert wird, dass das Bediengerät (11) an dem das ausgewählte Fach enthaltenden Schubregalmodul positioniert wird, und
**dass** im Schritt d) das Schubregalmodul (2) manuell bewegt wird, wobei eine weitere Brems- und Arretiervorrichtung des Bediengeräts (11) durch die Steuereinrichtung derart angesteuert wird, dass das ausgewählte Fach (4) vor der Frontebene (10) positioniert wird.

18. Verfahren zum Einlagern nach einem der Ansprüche 13 - 15 oder 17 oder zum Auslagern nach Anspruch 16 oder 17, **dadurch gekennzeichnet, dass** die Schließvorrichtung (12, 13) des Bediengeräts (11) derart von der Steuereinrichtung gesteuert wird, dass sie den Zugriff auf die offene Seite (5) des ausgewählten Faches (4) erst freigibt, nachdem der Bediener einen Zugriffsberechtigungscode eingegeben hat.

## Claims

1. A storage unit with a plurality of closable compartments (3), including:
a plurality of sliding shelf modules (2), which are arranged next to one another in a first spatial direction (x) and which are received in a respective or a common housing (1),
wherein the sliding shelf modules (2) are movable out of the housing (1) in a second spatial direction (y) perpendicular to the first spatial direction (x),
wherein each sliding shelf module (2) is divided into a plurality of compartments (3) open on one side such that the open sides (5) of all the compartments (3) lie in a boundary plane (6) of the sliding shelf module (2) perpendicular to the first spatial direction (x) so that the open sides (5) of the compartments (3) of a sliding shelf module (2) slid into the housing (1) are closed by a wall (7) of the housing (1) or a wall (8) of an adjacent sliding shelf module (2),
wherein front sides (9), arranged perpendicular to the second spatial direction (y), of the sliding shelf module (2) slid into the housing (1) define a front plane (10), **characterised in that**
a service device (11), which enables access to a selected compartment (4), is movable in the first spatial direction (x) in front of the front plane (10),
wherein a sliding shelf module (2) containing the selected compartment (4) can be moved out of the housing (1) if the service device (11) is positioned at this sliding shelf module (2), wherein the sliding shelf module (2) can be moved out so far that the selected compartment (2) is situated in front of the front plane (10),
wherein the service device (11) includes a closing device (12, 13), which covers the open sides (5) of the compartments (3, 4) of the portion of the sliding shelf module (2) moved out in front of the front plane (10) and which is controllable by an electronic control device such that it permits access to the open side of the selected compartment (4).

2. A storage unit as claimed in claim 1, **characterised in that** the closing device includes:
a cover device (12), which extends over the entire dimension of the sliding shelf module (2) in a third spatial direction (z) perpendicular to the first spatial direction (x) and the second spatial direction (y), for covering the open sides (5) of the compartments (3, 4) of the portion of the sliding shelf module (2) moved out in front of the front plane (10), wherein the cover device (12) leaves a strip (16), extending in the third spatial direction (z), in the boundary plane (6) of the sliding shelf module (2), which has been moved out, uncovered, which includes the open side (5) of the selected compartment (4), and
a door device (13), which overlaps the strip (16) and is controlled by the electronic control device and which opens a window (14) for access to the open side of the selected compartment (4).

3. A storage unit as claimed in claim 2, **characterised in that** the cover device (12) includes a cover plate (15), which is connected to the door device (13) and lies in the boundary plane (6) of the sliding shelf module (2), which has been moved out, wherein the cover plate (15) is positioned during the outward movement of the sliding shelf module (2) such that the width of the strip (16) in the second spatial direction (y) corresponds to the width of the open side of the selected compartment (4).

4. A storage device as claimed in claim 2, **characterised in that** the cover device (12) includes a roller shutter (17), which is connected to the door device (13) and lies in the boundary plane of the sliding shelf module (2), which has been moved out, wherein the roller shutter extends from a reeling device (18) arranged adjacent to the door device (13) to the front side (9) of the sliding shelf module (2), which has been moved out.

5. A storage unit as claimed in claim 2, **characterised in that** the cover device (12) includes a roller shutter (17), which is connected to the door device (13) and lies in the boundary plane (6) of the sliding shelf module (2), which has been moved out, wherein the roller shutter (17) extends from a reeling device (18), which is arranged at the front side (9) of the sliding shelf module (2), which has been moved out, to the strip (16), wherein the roller shutter (17) is positioned during the outward movement of the sliding shelf module (2) such that the width of the strip (16) in the second spatial direction (y) corresponds to the width of the open side of the selected compartment (4).

6. A storage unit as claimed in one of claims 2-5, **characterised in that**
the door device (13) includes two sliding doors or roller shutters (19), which are movable towards one another in the third spatial direction (z) and
that the control device controls the door device (13) such that the edges (20), directed towards one another, of the two sliding doors or roller shutters (19) are positioned, during the positioning of the service device (11) and/or during the pulling out of the sliding shelf module (2) in the third spatial direction (z), at a location corresponding to the position of the selected compartment (4) and the window (14) is opened as soon as the sliding shelf module (2) has been pulled out so far that the open side of the selected compartment (4) is positioned behind the door device (13).

7. The storage unit as claimed in one of claims 1-6, **characterised in that** the electronic control device includes a memory, in which data, which correspond to a predetermined sliding shelf module and a predetermined compartment in the sliding shelf module, are stored in association with data, which characterise an article lying within the predetermined compartment, whereby this associated data is stored for all the articles stored in the storage unit.

8. A storage unit as claimed in one of claims 1-7, **characterised in that** the control device is coupled to the service device (11) such that it can detect the correct positioning of the service device in the first spatial direction (x).

9. A storage unit as claimed in claim 8, **characterised in that** the service device (11) includes a device for detecting the position of the sliding shelf module (2) moved out of the housing in the second spatial direction (y) and the control device is coupled to the service device (11) such that it can detect the position of the sliding shelf module (2) in the second spatial direction (y).

10. A storage unit as claimed in claim 9, **characterised in that** the control device controls the closing device (12, 13) such that it permits access to the open side of the selected compartment (4) after the control device has detected the correct position of the service device and the correct position of the sliding shelf module (2), which has been moved out.

11. A storage unit as claimed in one of claims 1-10, **characterised in that** the sliding shelf modules (2) may be pulled out of the housing (1) and slid into the housing (1) manually and that the service device (11) has a locking device, which ensures that the sliding shelf module (2), which has been moved out, can be pulled out to a position in which the selected compartment (4) is situated at a predetermined position in front of the front plane (10).

12. A storage unit as claimed in one of claims 1-11, **characterised in that** rear sides, disposed perpendicular to the second spatial direction (y), of the sliding shelf modules (2) pushed into the housing (1) define a second front plane (23) and
that a second service device (22), which permits access to a selected compartment (4), is movable in the first spatial direction (x) in front of the second front plane (23),
wherein a sliding shelf module (2), which contains the selected compartment (4), can be moved out of the housing (1) so far that the second service device (22) is positioned in front of the second front plane (23) at this sliding shelf module (2), wherein the sliding shelf module (2) can be moved out so far that the selected compartment (4) is situated in front of the second front plane (23),
wherein the second service device (22) includes a closing device which covers the open sides of the compartments of the portion of the sliding shelf module (2) which has been moved out in front of the second front plane (23) and which is controllable by the control device such that it permits access to the open side of the selected compartment (4).

13. A method of inserting an article into a storage unit with a plurality of closable compartments (3),
wherein the storage unit has a plurality of sliding shelf modules (2) arranged next to one another in a first spatial direction (x), which are received in a respective or a common housing (1), wherein the sliding shelf modules (2) are movable out of the housing in a second spatial direction (y) perpendicular to the first spatial direction (x), wherein each sliding shelf module (2) is divided into a plurality of compartments (3) open on one side such that the open sides (5) of all the compartments (3) lie in a boundary plane (6) of the sliding shelf module (2) perpendicular to the first spatial direction (x), so that the open sides (5) of the compartments (3) of a sliding shelf module (2) pushed into the housing (1) are closed by a wall (7) of the housing (1) or a wall (8) of an adjacent sliding shelf module (2), wherein front sides (9), disposed perpendicular to the second spatial direction (y), of the sliding shelf modules (2) pushed into the housing (10) define a front plane (10), **characterised in that**
the storage unit further includes a service device (11), which is movable in the first spatial direction (x) in front of the front plane (10), wherein a sliding shelf module (2) can be moved out of the housing (1), if the service device (1) is positioned at this sliding shelf module (2), wherein the service unit (11) includes a closing device (12, 13), which covers the open sides (5) of the compartments (3, 4) of the portion of the sliding shelf module (2) moved in front of the front plane (10), wherein:
a) data identifying an article to be inserted into the store is detected and input into an electronic control device of the storage unit,
b) a selected compartment (4) of the storage unit is assigned to the article and the data identifying the article is stored in the control device in association with data which characterises the selected compartment (4),
c) the service device (11) is positioned at the sliding shelf module (2) containing the selected compartment (4) by movement in the first spatial direction (x),
d) the sliding shelf module (2) is moved out of the housing (1) so far that the selected compartment (4) is situated in front of the front plane (10),
e) the closing device (12, 13) of the service device (11) is controlled by the control device such that it permits access to the open side (5) of the selected compartment (4), and
f) the article is inserted into the selected compartment (4).

14. A method of insertion into a store as claimed in claim 13, **characterised in that** in step a) the data identifying the article to be inserted into the store is detected by an identification code of the article being manually input by a user or an alphanumeric code or a bar code applied to the article is read mechanically.

15. A method of insertion into a store as claimed in claim 13 or 14, **characterised in that** additionally in step a) dimensions of the article to be inserted into the store are detected and that in step b) the selected compartment (4) of the storage unit is assigned in dependence on the detected dimensions of the article such that the storage volumes available in the storage unit are optimally utilised.

16. A method of removing an article from a store with a plurality of closable compartments (3),
wherein the storage unit has a plurality of sliding shelf modules (2) arranged next to one another in a first spatial direction (x), which are received in a respective or a common housing (1), wherein the sliding shelf modules (2) are movable out of the housing in a second spatial direction (y) perpendicular to the first spatial direction (x), wherein each sliding shelf module (2) is divided into a plurality of compartments (3) open on one side such that the open sides (5) of all the compartments (3) lie in a boundary plane (6) of the sliding shelf module (2) perpendicular to the first spatial direction (x), so that the open sides (5) of the compartments (3) of a sliding shelf module (2) pushed into the housing (1) are closed by a wall (7) of the housing (1) or a wall (8) of an adjacent sliding shelf module (2), wherein front sides (9), disposed perpendicular to the second spatial direction (y), of the sliding shelf modules (2) pushed into the housing (10) define a front plane (10), **characterised in that**
the storage unit further includes a service device (11), which is movable in the first spatial direction (x) in front of the front plane (10), wherein a sliding shelf module (2) can be moved out of the housing (1), if the service device (1) is positioned at this sliding shelf module (2), wherein the service unit (11) includes a closing device (12, 13), which covers the open sides (5) of the compartments (3, 4) of the portion of the sliding shelf module (2) moved in front of the front plane (10), wherein:
a) data identifying the article to be removed from the store is input into an electronic control device of the storage unit,
b) a selected compartment (4), in which the article to be removed from the store is stored, is determined by the control device on the basis of the data identifying the article to be removed from the store,
c) the service device (11) is positioned at the sliding shelf module (2) containing the selected compartment (4) by movement in the first spatial direction (x),
d) the sliding shelf module (2) is moved out of the housing (1) so far that the selected compartment (4) is situated in front of the front plane (10),
e) the closing device (12, 13) of the service device (11) is controlled by the control device such that it permits access to the open side (5) of the selected compartment (4), and
f) the article is removed from the selected compartment (4).

17. A method of insertion into a store as claimed in one of claims 13-15 or of removal from a store as claimed in claim 16, **characterised in that**
in step c) the service device is moved manually, whereby a braking and locking device of the service device (11) is controlled by the control device such that the service device (11) is positioned at the sliding shelf module containing the selected compartment, and
that in step d) the sliding shelf module (2) is moved manually, whereby a further braking and locking device of the service device (11) is controlled by the control device such that the selected compartment (4) is positioned in front of the front plane (10).

18. A method of insertion into a store as claimed in one of claims 13-15 or 17 or of removal from a store as claimed in claim 16 or 17, **characterised in that** the closing device (12, 13) of the service device (11) is controlled by the control device such that it only permits access to the open side (5) of the selected compartment (4) after the user has input an access authorisation code.

## Revendications

1. Magasin comprenant une pluralité de compartiments verrouillables (3), présentant :
plusieurs modules de rayonnage coulissants (2) agencés l'un à côté de l'autre le long d'une première direction spatiale (x), qui sont logés respectivement ou conjointement dans un boîtier (1),
dans lequel les modules de rayonnage coulissants (2) peuvent être déplacés dans une deuxième direction spatiale (y) perpendiculaire à la première direction spatiale (x) hors du boîtier (1),
dans lequel chaque module de rayonnage coulissant (2) est subdivisé en une pluralité de compartiments (3) ouverts d'un côté de sorte que les côtés ouverts (5) de tous les compartiments (3) se trouvent dans un plan de délimitation (6) du module de rayonnage coulissant (2) perpendiculaire à la première direction spatiale (x) de sorte que les côtés ouverts (5) des compartiments (3) d'un module de rayonnage coulissant (2) inséré dans le boîtier (1) soient fermés par une paroi (7) du boîtier (1) ou par une paroi (8) d'un module de rayonnage coulissant adjacent (2),
dans lequel des côtés frontaux (9) - agencés perpendiculairement à la deuxième direction spatiale (y) - des modules de rayonnage coulissants (2) insérés dans le boîtier (1) forment un plan frontal (10), **caractérisé par** :
un élément de manoeuvre (11) libérant l'accès à un compartiment choisi (4), qui peut être déplacé devant le plan frontal (10) le long de la première direction spatiale (x),
dans lequel un module de rayonnage coulissant (2) contenant le compartiment choisi (4) peut être déplacé hors du boîtier (1) pour autant que l'élément de manoeuvre (11) soit positionné sur ce module de rayonnage coulissant (2), dans lequel le module de rayonnage coulissant (2) peut en être extrait jusqu'à ce que le compartiment choisi (4) se trouve devant le plan frontal (10), et
dans lequel l'élément de manoeuvre (11) présente un dispositif de verrouillage (12, 13), qui recouvre les côtés ouverts (5) des compartiments (3, 4) de la partie du module de rayonnage coulissant (2) extraite devant le plan frontal (10) et qui peut être commandé par un dispositif de commande électronique de manière à libérer l'accès au côté ouvert du compartiment choisi (4).

2. Magasin selon la revendication 1, **caractérisé en ce que** le dispositif de verrouillage comprend :
un dispositif de recouvrement (12) s'étendant dans une troisième direction spatiale (z) perpendiculaire à la première direction spatiale (x) et à la deuxième direction spatiale (y) sur toute la dimension du module de rayonnage coulissant (2) pour recouvrir les côtés ouverts (5) des compartiments (3, 4) de la partie du module de rayonnage coulissant (2) extraite devant le plan frontal (10), dans lequel le dispositif de recouvrement (12) laisse non recouverte une bande (16) s'étendant dans la troisième direction spatiale (z) dans le plan de délimitation (6) du module de rayonnage coulissant (2) extrait, qui inclut le côté ouvert (5) du compartiment choisi (4), et
un dispositif de porte (13) recouvrant la bande (16) et commandé par le dispositif de commande électronique, qui ouvre une fenêtre (14) pour accéder au côté ouvert du compartiment choisi (4).

3. Magasin selon la revendication 2, **caractérisé en ce que** le dispositif de recouvrement (12) présente un panneau de recouvrement (15) raccordé au dispositif de porte (13) et se trouvant dans le plan de délimitation (6) du module de rayonnage coulissant (2) extrait, dans lequel le panneau de recouvrement (15) est positionné lors de l'extraction du module de rayonnage coulissant (2) de sorte que la largeur de la bande (16) dans la deuxième direction spatiale (y) corresponde à la largeur du côté ouvert du compartiment choisi (4).

4. Magasin selon la revendication 2, **caractérisé en ce que** le dispositif de recouvrement (12) présente un volet roulant (17) raccordé au dispositif de porte (13) et se trouvant dans le plan de délimitation (6) du module de rayonnage coulissant (2), dans lequel le volet roulant s'étend d'un dispositif enrouleur (18) disposé de manière adjacente au dispositif de porte (13) au côté frontal (9) du module de rayonnage coulissant (2) extrait.

5. Magasin selon la revendication 2, **caractérisé en ce que** le dispositif de recouvrement (12) présente un volet roulant (17) raccordé au dispositif de porte (13) et se trouvant dans le plan de délimitation (6) du module de rayonnage coulissant (2) extrait, dans lequel le volet roulant (17) s'étend d'un dispositif enrouleur (18) disposé sur le côté frontal (9) du module de rayonnage coulissant (2) extrait jusqu'à la bande (16), dans lequel le volet roulant (17) est positionné lors de l'extraction du module de rayonnage coulissant (2) de sorte que la largeur de la bande (16) dans la deuxième direction spatiale (y) corresponde à la largeur du côté ouvert du compartiment choisi (4).

6. Magasin selon l'une quelconque des revendications 2 à 5, **caractérisé en ce que**
le dispositif de porte (13) comprend deux portes coulissantes ou volets roulants (19) déplaçables l'un sur l'autre dans la troisième direction spatiale (z), et
**en ce que** le dispositif de commande commande le dispositif de porte (13) de sorte que les bords (20) tournés l'un vers l'autre, des deux portes coulissantes ou volets roulants (19) soient positionnés pendant le positionnement de l'élément de manoeuvre (11) et/ou pendant l'extraction du module de rayonnage coulissant (2) dans la troisième direction spatiale (z) à un endroit correspondant à la position du compartiment choisi (4) et que la fenêtre (14) soit ouverte dès que le module de rayonnage coulissant (2) soit retiré jusqu'à ce que le côté ouvert du compartiment choisi (4) soit positionné derrière le dispositif de porte (13).

7. Magasin selon l'une quelconque des revendications 1 à 6, **caractérisé en ce que** le dispositif de commande électronique présente une mémoire, dans laquelle des données, qui identifient respectivement un module de rayonnage coulissant déterminé et un compartiment déterminé dans le module de rayonnage coulissant, sont enregistrées en rapport avec des données qui caractérisent un objet qui se trouve dans le compartiment déterminé, dans lequel ces données affectées l'une à l'autre sont enregistrées pour tous les objets entreposés dans le magasin.

8. Magasin selon l'une quelconque des revendications 1 à 7, **caractérisé en ce que** le dispositif de commande est couplé à l'élément de manoeuvre (11) de sorte qu'il puisse détecter le positionnement correct de l'élément de manoeuvre dans la première direction spatiale (x).

9. Magasin selon la revendication 8, **caractérisé en ce que** l'élément de manoeuvre (11) présente un dispositif pour détecter la position du module de rayonnage coulissant (2) extrait du boîtier dans la deuxième direction spatiale (y) et **en ce que** le dispositif de commande est couplé à l'élément de manoeuvre (11) de sorte qu'il puisse détecter la position du module de rayonnage coulissant (2) dans la deuxième direction spatiale (y).

10. Magasin selon la revendication 9, **caractérisé en ce que** le dispositif de commande commande le dispositif de verrouillage (12, 13) de sorte qu'il libère l'accès au côté ouvert du compartiment choisi (4), après que le dispositif de commande a détecté la position correcte de l'élément de manoeuvre et la position correcte du module de rayonnage coulissant (2) extrait.

11. Magasin selon l'une quelconque des revendications 1 à 10, **caractérisé en ce que** les modules de rayonnage coulissants (2) peuvent être retirés manuellement du boîtier (1) et être insérés manuellement dans le boîtier (1) et **en ce que** l'élément de manoeuvre (11) présente un dispositif d'arrêt, qui garantit que le module de rayonnage coulissant (2) extrait soit retiré jusque dans une position, dans laquelle le compartiment choisi (4) se trouve dans une position prédéfinie devant le plan frontal (10).

12. Magasin selon l'une quelconque des revendications 1 à 11, **caractérisé en ce que**
des côtés arrière agencés perpendiculairement à la seconde direction spatiale (y) des modules de rayonnage coulissants (2) insérés dans le boîtier (1) forment un second plan frontal (23) et **en ce que**
un second élément de manoeuvre (22) libérant l'accès à un compartiment choisi (4) peut être déplacé devant le second plan frontal (23) le long de la première direction spatiale (x),
dans lequel un module de rayonnage coulissant (2) contenant le compartiment choisi (4) peut être extrait du boîtier (1) pour autant que le second élément de manoeuvre(22) soit positionné devant le second plan frontal (23) sur ce module de rayonnage coulissant (2), dans lequel le module de rayonnage coulissant (2) peut être extrait jusqu'à ce que le compartiment choisi (4) se trouve devant le second plan frontal (23), et
dans lequel le second élément de manoeuvre (22) présente un dispositif de verrouillage qui recouvre les côtés ouverts des compartiments de la partie du module de rayonnage coulissant extrait devant le second plan frontal (23) et qui peut être commandé par le dispositif de commande de sorte qu'il libère l'accès au côté ouvert du compartiment choisi (4).

13. Procédé pour entreposer un objet dans un magasin comprenant une pluralité de compartiments (3) verrouillables,
dans lequel le magasin présente plusieurs modules de rayonnage coulissants (2) disposés l'un à côté de l'autre le long d'une première direction spatiale (x), qui sont logés respectivement ou conjointement dans un boîtier (1), dans lequel les modules de rayonnage coulissants (2) peuvent être extraits du boîtier (1) dans une deuxième direction spatiale (y) perpendiculaire à la première direction spatiale (x), dans lequel chaque module de rayonnage coulissant (2) est subdivisé en une pluralité de compartiments (3) ouverts d'un côté de sorte que les côtés ouverts (5) de tous les compartiments (3) se trouvent dans un plan de délimitation (6) perpendiculaire à la première direction spatiale (x) du module de rayonnage coulissant (2) de sorte que les côtés ouverts (5) des compartiments (3) d'un module de rayonnage coulissant (2) inséré dans le boîtier (1) soient fermés par une paroi (7) du boîtier (1) ou par une paroi (8) d'un module de rayonnage coulissant (2) adjacent, et dans lequel des côtés frontaux (9) - agencés perpendiculairement à la deuxième direction spatiale (y) - des modules de rayonnage coulissants (2) insérés dans le boîtier (1) formant un plan frontal (10), **caractérisé en ce que**β
le magasin présente en outre un élément de manoeuvre (1) qui peut être déplacé devant le plan frontal (10) le long de la première direction spatiale (x), dans lequel un module de rayonnage coulissant (2) peut être extrait du boîtier (1) pour autant que l'élément de manoeuvre (11) soit positionné sur ce module de rayonnage coulissant (2), l'élément de manoeuvre (11) présentant un dispositif de verrouillage (12, 13) qui recouvre les côtés ouverts (5) des compartiments (3, 4) de la partie du module de rayonnage coulissant (2) déplacée devant le plan frontal (10), dans lequel :
a) des données identifiant un objet à entreposer sont détectées et saisies dans un dispositif de commande électronique du magasin,
b) un compartiment choisi (4) du magasin est affecté à l'objet et les données identifiant l'objet, en rapport avec des données qui caractérisent le compartiment choisi (4), sont enregistrées dans le dispositif de commande,
c) l'élément de manoeuvre (11) est positionné par déplacement dans la première direction spatiale (x) sur le module de rayonnage coulissant (2) contenant le compartiment choisi (4),
d) le module de rayonnage coulissant (2) est extrait du boîtier (1) jusqu'à ce que le compartiment choisi (4) se trouve devant le plan frontal (10),
e) le dispositif de verrouillage (12, 13) de l'élément de manoeuvre (11) est commandé par le dispositif de commande de sorte qu'il libère l'accès au côté ouvert (5) du compartiment choisi (4), et
f) l'objet est entreposé dans le compartiment choisi (4).

14. Procédé d'entreposage selon la revendication 13, **caractérisé en ce qu'**à l'étape a), les données identifiant l'objet à entreposer sont détectées en saisissant un code d'identification de l'objet manuellement par un utilisateur ou en lisant par machine un code alphanumérique appliqué sur l'objet ou un code à barres.

15. Procédé d'entreposage selon la revendication 13 ou 14, **caractérisé en ce qu'**en complément à l'étape a), les dimensions de l'objet à entreposer sont détectéeset **en ce qu'**à l'étape b), le compartiment choisi (4) du magasin est affecté en fonction des dimensions détectées de l'objet de sorte que les volumes disponibles dans le magasin soient exploités de manière optimale.

16. Procédé d'extraction d'un objet d'un magasin comprenant une pluralité de compartiments verrouillables (3),
dans lequel le magasin présente plusieurs modules de rayonnage coulissants (2) disposés l'un à côté de l'autre le long d'une première direction spatiale (x), qui sont logés respectivement ou conjointement dans un boîtier (1), dans lequel les modules de rayonnage coulissants (2) peuvent être extraits du boîtier (1) dans une deuxième direction spatiale (y) perpendiculaire à la première direction spatiale (x), dans lequel chaque module de rayonnage coulissant (2) est subdivisé en une pluralité de compartiments (3) ouverts d'un côté de sorte que les côtés ouverts (5) de tous les compartiments (3) se trouvent dans un plan de délimitation (6) du module de rayonnage coulissant (2) perpendiculaire à la première direction spatiale (x) de sorte que les côtés ouverts (5) des compartiments (3) d'un module de rayonnage coulissant (2) inséré dans le boîtier (1) soient fermés par une paroi (7) du boîtier (1) ou par une paroi (8) d'un module de rayonnage coulissant (2) adjacent, dans lequel des côtés frontaux (9) - agencés perpendiculairement à la deuxième direction spatiale (y) - des modules de rayonnage coulissants (2) insérés dans le boîtier (1) forment un plan frontal (10),
**caractérisé en ce que**β
le magasin présente en outre un élément de manoeuvre (1) qui peut être déplacé devant le plan frontal (10) le long de la première direction spatiale (x), dans lequel un module de rayonnage coulissant (2) peut être extrait du boîtier (1) pour autant que l'élément de manoeuvre (11) soit positionné sur ce module de rayonnage coulissant (2), l'élément de manoeuvre (11) présentant un dispositif de verrouillage (12, 13) qui recouvre les côtés ouverts (5) des compartiments (3, 4) de la partie du module de rayonnage coulissant (2) déplacée devant le plan frontal (10), dans lequel :
a) des données identifiant l'objet à entreposer sont saisies dans un dispositif de commande électronique du magasin,
b) un compartiment choisi (4), dans lequel est entreposé l'objet à entreposer, est déterminé par le dispositif de commande sur la base des données identifiant l'objet à entreposer,
c) l'élément de manoeuvre (11) est positionné par déplacement dans la première direction spatiale (x) sur le module de rayonnage coulissant (2) contenant le compartiment choisi (4),
d) le module de rayonnage coulissant (2) est extrait du boîtier (1) jusqu'à ce que le compartiment choisi (4) se trouve devant le plan frontal (10),
e) le dispositif de verrouillage (12, 13) de l'élément de manoeuvre (11) est commandé par le dispositif de commande de sorte qu'il libère l'accès au côté ouvert (5) du compartiment choisi (4), et
f) l'objet est retiré du compartiment choisi (4).

17. Procédé d'entreposage selon l'une quelconque des revendications 13 à 15 ou de retrait selon la revendication 16, **caractérisé en ce que** :
à l'étape c), l'élément de manoeuvre est déplacé manuellement, dans lequel un dispositif de freinage et d'arrêt de l'élément de manoeuvre (11) est commandé par le dispositif de commande de manière à positionner l'élément de manoeuvre (11) sur le module de rayonnage coulissant contenant le compartiment choisi, et
**en ce qu'**à l'étape d), le module de rayonnage coulissant (2) est déplacé manuellement, dans lequel un autre dispositif de freinage et d'arrêt de l'élément de manoeuvre (11) est commandé par le dispositif de commande de sorte que le compartiment choisi (4) soit positionné devant le plan frontal (10).

18. Procédé d'entreposage selon l'une quelconque des revendications 13 à 15 ou 17 ou de retrait selon la revendication 16 ou 17, **caractérisé en ce que** le dispositif de verrouillage (12, 13) de l'élément de manoeuvre (11) est commandé par le dispositif de commande de sorte qu'il ne libère l'accès au côté ouvert (5) du compartiment choisi (4) qu'après que l'utilisateur a saisi un code d'autorisation d'accès.
